# EUROPÄISCHE PATENTSCHRIFT

(11) **EP 3 698 994 B1**
(45) Veröffentlichungstag und Bekanntmachung des Hinweises auf die Patenterteilung: **03.07.2024**
(21) Anmeldenummer: 20157711.1
(22) Anmeldetag: 17.02.2020
(51) Int. Cl.: B60D 1/62, B60D 1/24

(54) **TRAGBAUTEIL ALS BESTANDTEIL EINES ANHÄNGERS ODER LASTENTRÄGERS**
SUPPORT COMPONENT AS PART OF A TRAILER OR LOAD CARRIER
COMPOSANT PORTEUR COMME PARTIE INTÉGRANTE D'UNE REMORQUE OU D'UN PORTE-CHARGE

(30) Priorität: 19.02.2019 DE 102019104224; 28.08.2019 DE 102019123133; 29.08.2019 DE 102019123237
(43) Veröffentlichungstag der Anmeldung: 26.08.2020
(73) Patentinhaber: WESTFALIA - Automotive GmbH, 33378 Rheda-Wiedenbrück (DE)
(72) Erfinder: ANGERMANN, Kay, 04720 Döbeln (DE); STOCKHAUS, Tim, 33613 Bielefeld (DE)
(74) Vertreter: Patentanwälte Bregenzer und Reule Partnerschaftsgesellschaft mbB

(56) Entgegenhaltungen:
- WO-A1-2015/134817
- DE-A1-102016 108 541
- DE-A1-102016 109 425
- DE-A1-102016 110 460
- DE-B3-102017 107 064
- GB-A- 2 462 482
- US-A- 4 253 331
- US-A1- 2010 332 049

## Beschreibung

Die Erfindung betrifft ein Tragbauteil als Bestandteil eines Anhängers oder Lastenträgers zur lösbaren Ankopplung an ein Zugfahrzeug, gemäß dem Oberbegriff des Anspruchs 1.

Ein derartiges Tragbauteil ist beispielsweise in DE 10 2016 109 425 A1 erläutert.

Ein in WO 2017/162 634 A1 erläutertes Tragbauteil ist beispielsweise ein Bestandteil einer Deichsel eines Anhängers und durch eine Kraft quer zu seiner Längsachse oder Längserstreckung in einem Verformungsabschnitt, beispielsweise etwa längsmittig, verformbar. Ein an dem Verformungsabschnitt angeordneter Sensor einer Kraftmesseinrichtung ist zur Ermittlung der Verformung und somit zur Ermittlung der Stützkraft angeordnet.

Allerdings hatte sich in der Praxis herausgestellt, dass die Erfassung einer Zugkraft, d. h. einer Längskraft in Richtung der Längsachse oder Längserstreckung des Tragbauteils anhand der Kraftmesseinrichtung nicht möglich ist, weil das Tragbauteil bei normalem Gebrauch bezüglich der Längsachse nicht gelängt wird oder gestaucht wird.

Es ist daher die Aufgabe der Erfindung, ein verbessertes Tragbauteil bereitzustellen, mit dem eine Ermittlung einer Längskraftkomponente einer in einer Längsrichtung oder entlang einer Längsachse des Tragbauteils wirkenden Längskraft, insbesondere Schubkraft oder Zugkraft, möglich ist.

Zur Lösung der Aufgabe ist ein Tragbauteil gemäß der technischen Lehre des Anspruchs 1 vorgesehen.

Die Erfindung betrifft ferner ein Tragbauteil als Bestandteil eines Anhängers oder Lastenträgers zur lösbaren Ankopplung an ein Zugfahrzeug, wobei das Tragbauteil sich entlang einer Längsachse erstreckt und mindestens eine an einem Montageort eines Verformungsabschnitts angeordnete Kraftmesseinrichtung zur Erfassung einer auf das Tragbauteil bei Belastung in Richtung der Längsachse einwirkenden Kraftkomponente einer Kraft, insbesondere einer Zugkraft und/oder Stützkraft, aufweist, wobei der Verformungsabschnitt durch die Kraftkomponente der Kraft verformbar ist und in Bezug auf die Längsachse neben mindestens einem Tragabschnitt des Tragbauteils, insbesondere zwischen einem ersten Tragabschnitt und einem zweiten Tragabschnitt des Tragbauteils, angeordnet ist. Es ist vorgesehen, dass der Verformungsabschnitt abseits des Montageorts der mindestens einen Kraftmesseinrichtung gegenüber dem einen Tragabschnitt eine geringere Biegesteifigkeit bezüglich der Längsachse aufweist und/oder dass das Tragbauteil einen Betätigungsabschnitt zur Verformung des Verformungsabschnitts aufweist, wobei sich der Betätigungsabschnitt quer zu der Längsachse erstreckt und Längsendbereiche des Betätigungsabschnitts einen Abstand quer zu der Längsachse aufweisen.

Die Schubkraft kann auch als Druckkraft bezeichnet werden. Die Schubkraft oder die Druckkraft einerseits und andererseits die Zugkraft sind entgegengerichtet.

Es ist dabei ein Grundgedanke, dass ähnlich dem Konzept, dass quer zu der Längsachse oder Längserstreckung des Tragbauteils wirkende Kräfte, beispielsweise Stützkräfte, die zu einer Verformung des Verformungsabschnitts führen und durch die Kraftmesseinrichtung erfassbar sind, die Längskraftkomponente zu einer Verformung des Verformungsabschnitts führt, sodass letztlich die Kraftmesseinrichtung die Längskraftkomponente anhand einer Verformung des Verformungsabschnitts ermitteln kann. Dabei ist die Ermittlung unmittelbar am Verformungsabschnitt selbst möglich, aber auch abseits davon, beispielsweise an Abschnitten des Tragbauteils, die sich neben dem Verformungsabschnitt befinden.

Das Tragbauteil erstreckt sich entlang seiner Längsachse. Das Tragbauteil weist mindestens eine an einem Montageort eines Verformungsabschnitts angeordnete Kraftmesseinrichtung zur Erfassung einer auf das Tragbauteil bei Belastung in Richtung der Längsachse einwirkenden Kraftkomponente einer Kraft, insbesondere einer Zugkraft und/oder Stützkraft, auf.

Der Verformungsabschnitt ist vorteilhaft durch die Kraftkomponente der Kraft verformbar und in Bezug auf die Längsachse neben mindestens einem Tragabschnitt des Tragbauteils, insbesondere zwischen einem ersten Tragabschnitt und einem zweiten Tragabschnitt des Tragbauteils, angeordnet.

Der Verformungsabschnitt weist vorteilhaft abseits des Montageorts der mindestens einen Kraftmesseinrichtung gegenüber dem einen Tragabschnitt eine geringere Biegesteifigkeit bezüglich der Längsachse auf.

Vorteilhaft weist das Tragbauteil einen Betätigungsabschnitt zur Verformung des Verformungsabschnitts auf, wobei sich der Betätigungsabschnitt quer zu der Längsachse erstreckt und Längsendbereiche des Betätigungsabschnitts einen Abstand quer zu der Längsachse aufweisen.

Eine alternative oder ergänzende Formulierung der Erfindung kann folgendes vorsehen:
Tragbauteil als Bestandteil eines Anhängers oder Lastenträgers zur lösbaren Ankopplung an ein Zugfahrzeug oder als Bestandteil einer Trägeranordnung zum Tragen einer Kupplungshalterung für ein Kuppelelement einer zum Anhängen eines Anhängers oder Tragen eines Lastenträgers vorgesehenen Anhängekupplung eines Zugfahrzeugs, wobei das Tragbauteil sich entlang einer Längsachse erstreckt und mindestens eine an einem Montageort eines Verformungsabschnitts angeordnete Kraftmesseinrichtung zur Erfassung einer auf das Tragbauteil bei Belastung in Richtung der Längsachse einwirkenden Kraftkomponente einer Kraft, insbesondere einer Zugkraft und/oder Stützkraft, aufweist, wobei der Verformungsabschnitt durch die Kraftkomponente der Kraft verformbar ist und in Bezug auf die Längsachse neben mindestens einem Tragabschnitt des Tragbauteils, insbesondere zwischen einem ersten Tragabschnitt und einem zweiten Tragabschnitt des Tragbauteils, angeordnet ist, dadurch gekennzeichnet, dass der Verformungsabschnitt abseits des Montageorts der mindestens einen Kraftmesseinrichtung gegenüber dem einen Tragabschnitt eine geringere Biegesteifigkeit bezüglich der Längsachse aufweist und/oder dass das Tragbauteil einen Betätigungsabschnitt zur Verformung des Verformungsabschnitts aufweist, wobei sich der Betätigungsabschnitt quer zu der Längsachse erstreckt und Längsendbereiche des Betätigungsabschnitts einen Abstand quer zu der Längsachse aufweisen.

Die Längskraftkomponente wird von der Kraftmesseinrichtung beispielsweise durch eine Verformung des Verformungsabschnitts selbst ermittelt. Beispielsweise ermittelt die Kraftmesseinrichtung einen Kraftwert und/oder einen Betrag der Längskraftkomponente.

Der Verformungsabschnitt ist vorzugsweise elastisch verformbar, d. h. er verformt sich durch Kraftbeaufschlagung und nimmt seine ursprüngliche Gestalt ganz oder zumindest im Wesentlichen wieder ein, wenn die Kraftbeaufschlagung aufhört.

Bevorzugt ist der Verformungsabschnitt in der Art einer Feder oder eines elastischen Abschnittes ausgestaltet, die bzw. der in Bezug einer Kraftbeanspruchung entlang der Längsachse federnd nachgiebig oder elastisch ist. Selbstverständlich kann der Verformungsabschnitt auch in anderen Richtungen nachgiebig sein, beispielsweise bei einer Torsionskraft oder bei einer Belastung quer zu der Längsachse.

Das Tragbauteil ist vorzugsweise ein Schmiedebauteil und/oder Gussbauteil. Beispielsweise kann ein gegossenes Bauteil oder Gussbauteil geschmiedet sein, sodass es ein geschmiedetes Gussbauteil bildet.

Das Tragbauteil weist vorzugsweise einen massiven Querschnitt auf. Dieser massive Querschnitt ist vorzugsweise über die gesamte Längserstreckung des Tragbauteils vorhanden. Der massive Querschnitt ist vorzugsweise zumindest im Bereich des Verformungsabschnitts und/oder im Bereich der Längsendbereiche vorgesehen.

Prinzipiell möglich ist es aber auch, dass das Tragbauteil ganz oder abschnittsweise als Profilkörper oder Rohrkörper ausgestaltet ist. Beispielsweise sind die Längsendbereiche als Rohrkörper ausgestaltet. So ist es beispielweise möglich, dass der Verformungsabschnitt als massiver Abschnitt ausgestaltet ist, während die Längsendbereiche oder mindestens ein Längsendbereich als Rohrkörper ausgestaltet ist. Es ist aber auch möglich, dass der Verformungsabschnitt als Profilkörper oder Rohrkörper ausgestaltet ist, während die Längsendbereiche massive Querschnitte aufweisen. Ein Rohrkörper weist ein geschlossenes Umfangsprofil auf. Ein Profilkörper kann ein geschlossenes Umfangsprofil aufweisen. Ein Profilkörper kann auch seitlich, quer zu seiner Längsachse oder Längserstreckung, offen sein.

Das Tragbauteil besteht vorzugsweise aus Metall, insbesondere aus Stahl oder Aluminium.

Bei dem Tragbauteil ist vorzugsweise vorgesehen, dass der Verformungsabschnitt durch die Längskraftkomponente parallel zu der Längsachse verkürzbar oder verlängerbar ist. Der Verformungsabschnitt wird also beispielsweise länger, wenn eine Zugkraft längs der Längsachse auf das Tragbauteil einwirkt, hingegen kürzer, wenn eine Schubkraft entlang der Längsachse auf das Tragbauteil einwirkt.

Es ist möglich, dass ein Längsabstand der Längsendbereiche des Tragbauteils parallel zu der Längsachse durch die Längskraftkomponente verkürzbar oder verlängerbar ist. Beispielsweise sind die Längsendbereiche des Tragbauteils bei einer auf das Tragbauteil einwirkenden Schubkraft näher beieinander in Bezug auf die Längsachse als ohne Krafteinwirkung bezüglich der Längsachse. Bei einer Zugkraftbeanspruchung hingegen ist der Abstand zwischen den Längsendbereichen in Bezug auf die Längsachse größer.

Vorzugsweise der mindestens eine Sensor oder sind mehrere oder alle Sensoren des Tragbauteils unmittelbar an dem Tragbauteil angeordnet. Bevorzugt ist mindestens ein Sensor unmittelbar am Verformungsabschnitt angeordnet. Es ist möglich, dass ein Sensor an einem neben dem Verformungsabschnitt angeordneten Betätigungsabschnitt angeordnet ist. Der Sensor kann aber auch teilweise am Verformungsabschnitt, teilweise am Betätigungsabschnitt angeordnet sein. Die Sensoren sind zweckmäßigerweise zwischen den Längsendbereichen des Tragbauteils an demselben angeordnet.

Wenn an dem Tragbauteil für den mindestens einen Sensor der Kraftmesseinrichtung eine Aussparung oder Vertiefung vorgesehen ist, kann diese eine zumindest minimale Verformbarkeit in Bezug auf die Längsachse bewirken. Vorteilhaft ist jedoch vorgesehen, dass die Verformbarkeit des Verformungsabschnitts parallel zu der Längsachse größer als eine Verformbarkeit ist, die sich dadurch ergibt, dass für den mindestens einen Sensor der Kraftmesseinrichtung eine Aussparung an dem Verformungsabschnitt vorgesehen ist.

Bei dem Tragbauteil ist es vorteilhaft, wenn die Verformbarkeit des Verformungsabschnitts durch die Längskraftkomponente nicht durch eine Schwächung des Tragbauteils an einem Montageort des mindestens einen Sensors der Kraftmesseinrichtung, insbesondere nicht durch eine Aussparung an dem Montageort, gebildet ist. Mithin sind also anderweitige Maßnahmen als für die Anbringung des Sensors notwendige Maßnahmen dafür vorgesehen, dass der Verformungsabschnitt durch die Längskraftkomponente, beispielsweise quer zur Längsachse und/oder entlang der Längsachse, verformbar ist.

Vorteilhaft ist vorgesehen, dass das Tragbauteil Kraftumlenkungsmittel zur Kraftumlenkung quer zu der Längsachse, insbesondere im Bereich des Verformungsabschnitts, aufweist. Die Kraftumlenkungsmittel können beispielsweise durch den nachfolgend erläuterten mindestens einen Betätigungsabschnitt oder mehrere Betätigungsabschnitte realisiert sein.

Vorteilhaft ist vorgesehen, dass das Tragbauteil mindestens einen Betätigungsabschnitt zur Verformung des Verformungsabschnitts aufweist, der sich zwischen einem der Längsendbereiche des Tragbauteils und dem Verformungsabschnitt quer zu der Längsachse erstreckt. Der Betätigungsabschnitt weist beispielsweise Längsendbereiche auf, die einen Abstand quer zu der Längsachse aufweisen. Ein Längsendbereich des Betätigungsabschnitts ist beispielsweise mit dem Verformungsabschnitt, der andere Längsendbereich des Betätigungsabschnitts mit einem Längsendbereich des Tragbauteils oder einem Tragabschnitt des Tragbauteils verbunden, welches seinerseits den Längsendbereich des Tragbauteils aufweist oder mit diesem verbunden ist.

Bei dem mindestens einen Betätigungsabschnitt handelt es sich beispielsweise um einen Profilkörper und/oder einen Abschnitt des Tragbauteils.

Ein bevorzugtes Konzept sieht vor, dass der Verformungsabschnitt zwischen zwei Betätigungsabschnitten zur Verformung des Verformungsabschnitts angeordnet ist. Somit kann der Verformungsabschnitt also voneinander entgegengesetzten Seiten her durch die jeweiligen Betätigungsabschnitte betätigbar sein.

Es ist möglich, dass die Betätigungsabschnitte zur selben Seite oder zu einander entgegengesetzten Seiten des Verformungsabschnitts von dem Verformungsabschnitt abstehen.

Vorzugsweise ist vorgesehen, dass der mindestens eine Betätigungsabschnitt zur Kraftübertragung der in Richtung der Längsachse gerichteten Längskraftkomponente der Lastkraft ausgestaltet ist. Der mindestens eine Betätigungsabschnitt bildet also eine Übertragungskomponente für zumindest einen Teil der Lastkraft oder die Lastkraft als Ganzes. Beispielsweise überträgt der mindestens eine Betätigungsabschnitt zwischen seinen Längsendbereichen die Lastkraft als Ganzes oder deren Längskraftkomponente, sodass die Lastkraft oder die Längskraftkomponente auf den Verformungsabschnitt einwirken kann.

Bevorzugt ist vorgesehen, dass der mindestens eine Betätigungsabschnitt im Sinne einer Längenänderung, insbesondere einer Dehnung oder Stauchung, des Verformungsabschnitts und/oder im Sinne einer Krümmung des Verformungsabschnitts quer zu der Längsachse wirkt. Der Betätigungsabschnitt kann also beispielsweise den Verformungsabschnitt quer zur Längsachse auslenken, sodass sich dieser krümmt.

Der mindestens eine Betätigungsabschnitt ist vorteilhaft als ein Betätigungshebel zur Verformung des Verformungsabschnitts ausgestaltet und/oder bildet einen Betätigungshebel zur Verformung des Verformungsabschnitts. Die jeweiligen Längsenden des Betätigungsabschnitts oder Betätigungshebels weisen in Bezug auf die Längsachse einen Abstand zueinander auf, wobei ein Hebelende mit dem Verformungsabschnitt verbunden ist, das andere Hebelende mit einem Längsendbereich des Tragbauteils wirkverbunden ist, sodass eine Hebelkraft ausgehend von dem Längsendbereich des Tragbauteils über den Betätigungshebel auf den Verformungsabschnitt, zum Beispiel durch Kraftfluss und/oder Formschluss, übertragen wird.

Bevorzugt ist es, wenn der mindestens eine Betätigungsabschnitt zwischen dem Verformungsabschnitt und dem jeweiligen Längsendbereich des Tragbauteils frei verläuft und/oder nicht mit einer anderen Komponente, insbesondere des Tragbauteils, verbunden oder an einer anderen Komponente, insbesondere des Tragbauteils, abgestützt ist. Somit kann also der Betätigungsabschnitt ohne Beeinflussung von außen unmittelbar auf den Verformungsabschnitt einwirken.

Bei dem Tragbauteil ist vorteilhaft vorgesehen, dass der Verformungsabschnitt und der Betätigungsabschnitt in Bezug auf die Längsachse hintereinander angeordnet sind.

Das Tragbauteil ist vorzugsweise zwischen seinen Längsendbereichen frei tragend und/oder quer zu der Längsachse freistehend und/oder nicht abgestützt.

Das Tragbauteil als Ganzes ist vorteilhaft quer zur Längsachse zwischen seinen Längsendbereichen frei tragend.

Vorteilhaft ist vorgesehen, dass zumindest der Verformungsabschnitt frei tragend ist und/oder quer zu der Längsachse nicht abgestützt ist und/oder freistehend ist.

Zwischen den Längsendbereichen ist das Tragbauteil zweckmäßigerweise nicht abgestützt. Zwischen den Längsendbereichen ist das Tragbauteil im in den Anhänger, insbesondere dessen Deichsel, eingebauten Zustand oder als Bestandteil der Anhängekupplung vorteilhaft nicht abgestützt ist und/oder freistehend.

Vorzugsweise ist das Tragbauteil zur vollständigen und/oder ausschließlichen Kraftübertragung der Lastkraft zwischen dem Anhänger und dem Zugfahrzeug ausgestaltet, insbesondere im in den Anhänger, insbesondere dessen Deichsel, eingebauten Zustand oder als Bestandteil der Anhängekupplung. Es ist somit vorteilhaft kein weiteres tragendes oder stützendes Bauteil im Kraftfluss zwischen Anhänger und Zugfahrzeug parallel zu dem Tragbauteil vorgesehen, sodass die vollständige Lastkraft und/oder der Kraftfluss der Lastkraft über das Tragbauteil führt und/oder vom Tragbauteil abgestützt oder abstützbar ist.

Der Verformungsabschnitt und der mindestens eine Betätigungsabschnitt weisen zweckmäßigerweise in Bezug auf die Längsachse einen Längsabstand auf. Es kann aber auch vorgesehen sein, dass sich der Verformungsabschnitt und der mindestens eine Betätigungsabschnitt in Bezug auf die Längsachse zumindest teilweise überlappen. In Bezug auf die Längsachse sind also der Verformungsabschnitt und der Betätigungsabschnitt oder die Betätigungsabschnitte sozusagen sequenziell hintereinander angeordnet, wobei sie sich teilweise überlappen können.

Es kann vorgesehen sein, dass der Verformungsabschnitt und/oder mindestens eine Komponente der Kraftmesseinrichtung, beispielsweise der mindestens eine Sensor, an dem mindestens einen Betätigungsabschnitt angeordnet sind.

Vorzugsweise ist vorgesehen, dass der mindestens eine Betätigungsabschnitt rechtwinkelig quer oder schräg quer zu der Längsachse verläuft. Beispielsweise können der Betätigungsabschnitt und der Verformungsabschnitt eine stufige und/oder L-förmige Konfiguration bilden.

Der Verformungsabschnitt und der mindestens eine Betätigungsabschnitt sind vorteilhaft einstückig oder fest miteinander verbunden, insbesondere miteinander verschraubt oder stoffschlüssig. Beispielweise können der Betätigungsabschnitt und der Verformungsabschnitt anhand einer Schweißverbindung oder Klebeverbindung miteinander verbunden sein.

Zur Bereitstellung einer geringeren Nachgiebigkeit oder Steifigkeit des Verformungsabschnitts mit Bezug auf die Längsachse können verschiedenartige Maßnahmen einzeln oder auch in Kombination mit einander vorgesehen sein.

Vorzugsweise ist vorgesehen, dass der Verformungsabschnitt zur Bereitstellung einer geringeren Steifigkeit bezüglich der Längsachse mindestens eine Schwächungskontur, insbesondere eine Aussparung, aufweist. Vorzugsweise sind mehrere Schwächungskonturen vorgesehen. Die mindestens eine Schwächungskontur ist vorzugsweise von einer Aussparung verschieden oder wird nicht durch eine Aussparung gebildet, an oder in der der mindestens eine Sensor der Kraftmesseinrichtung angeordnet ist. Vorzugsweise ist die Schwächungskontur abseits eines Montageorts des mindestens einen Sensors der Kraftmesseinrichtung angeordnet oder vorgesehen. Die Schwächungskontur bildet eine gegebenenfalls zu einer Aussparung oder sonstigen Schwächung des Verformungsabschnitts am Montageort des Sensors vorgesehene zusätzliche Schwächungskontur. Vorzugsweise ist die mindestens eine Schwächungskontur an einer Seite des Verformungsabschnitts angeordnet, die zu dem Montageort des mindestens einen Sensors winkelig ist. Beispielsweise sind die mindestens eine Schwächungskontur und der Montageort für den mindestens einen Sensor an zueinander winkeligen Wandabschnitten vorgesehen oder weisen einen Winkelabstand bezüglich der Längsachse oder einer zu der Längsachse parallelen Achse auf.

Vorteilhaft ist vorgesehen, dass der Verformungsabschnitt zur Bereitstellung einer geringeren Steifigkeit bezüglich der Längsachse gegenüber mindestens einem in Bezug auf die Längsachse neben dem Verformungsabschnitt angeordneten Abschnitt des Tragbauteils, insbesondere mindestens einem Längsendbereich des Tragbauteils, abweichende Querschnittsgeometrie und/oder einen abweichenden Außenumfang, insbesondere Außenumfangslänge, und/oder eine abweichende Querschnittsfläche quer zu der Längsachse aufweist. Beispielsweise hat der Abschnitt neben dem Verformungsabschnitt einen größeren Außenumfang als der Verformungsabschnitt und/oder eine andere Außenumfangsgeometrie als der Verformungsabschnitt. So kann beispielsweise vorgesehen sein, dass der Abschnitt neben dem Verformungsabschnitt ein Vierkantprofil oder Rohrkörper mit rechteckigem Querschnitt ist, während der Verformungsabschnitt einen runden, ovalen oder elliptischen Querschnitt aufweist. Der Verformungsabschnitt kann auch einen T-förmigen oder doppel-T-förmigen oder I-förmigen Querschnitt aufweisen.

Es kann vorgesehen sein, dass der Verformungsabschnitt zur Bereitstellung einer geringeren Steifigkeit bezüglich der Längsachse aus einem ersten Material und ein in Bezug auf die Längsachse neben dem Verformungsabschnitt angeordneter Abschnitt des Tragbauteils, insbesondere mindestens ein Längsendbereich des Tragbauteils, aus einem zweiten Material hergestellt sind, wobei das erste Material eine geringere Biegesteifigkeit als das zweite Material aufweist. So kann beispielsweise der Verformungsabschnitt aus einem weicheren Metall als der neben dem Verformungsabschnitt als der in Bezug auf die Längsachse neben dem Verformungsabschnitt angeordnete Abschnitt des Tragbauteils aufweisen.

Zu erwähnen ist, dass bei beiden vorgenannten Maßnahmen, nämlich den geometrischen Maßnahmen als auch bei den Maßnahmen hinsichtlich des Materials, der in Bezug auf die Längsachse neben dem Verformungsabschnitt angeordnete Abschnitt unmittelbar neben dem Verformungsabschnitt angeordnet sein kann oder an diesen angrenzt oder auch einen Längsabstand zum Verformungsabschnitt aufweisen kann.

Bevorzugt ist vorgesehen, dass der Verformungsabschnitt mindestens eine Aussparung an seiner Außenumfangsfläche aufweist, die quer, insbesondere schräg, zur Längsachse des Tragbauteils verläuft. Es ist weiterhin möglich, dass der Verformungsabschnitt eine Ziehharmonika-Struktur aufweist.

Weiterhin ist es vorteilhaft, wenn der Verformungsabschnitt mindestens eine Auswölbung und/oder mindestens eine Vertiefung und/oder mindestens eine Aussparung quer zu der Längsachse und/oder mindestens einen Vorsprung quer zu der Längsachse aufweist. Die mindestens eine Vertiefung kann beispielsweise als eine Art Einbuchtung, Einprägung oder dergleichen ausgestaltet sein.

In Bezug auf die Tragstrukturen des Tragbauteils sind verschiedene der nachfolgend erläuterten Maßnahmen, auch in Kombination miteinander, möglich:
Es kann vorgesehen sein, dass das Tragbauteil als Ganzes oder im Wesentlichen, insbesondere der Verformungsabschnitt und/oder mindestens ein Längsbereich und/oder mindestens ein Betätigungsabschnitt des Verformungsabschnitts, als ein Rohrprofilkörper oder als ein Winkelprofilkörper ausgestaltet sind, welcher einen Grundschenkel und mindestens einen von dem Grundschenkel winkelig abstehenden Seitenschenkel umfasst. Vorzugsweise sind zwei vom Grundschenkel winkelig abstehende Seitenschenkel vorgesehen. Der Grundschenkel und der mindestens eine Seitenschenkel erstrecken sich z.B. entlang der Längsachse, insbesondere parallel zu der Längsachse. Die Seitenschenkel können durch einen dem Grundschenkel gegenüberliegenden Wandabschnitt miteinander verbunden sein.

Der mindestens eine Sensor kann beispielsweise direkt am Außenumfang des Tragbauteils, beispielsweise des Verformungsabschnitts, angeordnet sein. Variante der Erfindung sieht vor, dass, dass an einem insbesondere an dem Verformungsabschnitt vorgesehenen Montageort des mindestens einen Sensors der Kraftmesseinrichtung eine Aussparung angeordnet ist. Der Sensor kann in oder an der Aussparung angeordnet sein.

Eine Variante der Erfindung sieht vor, dass an einem Montageort des mindestens einen Sensors der Kraftmesseinrichtung mindestens ein vor einen Grundkörper des Verformungsabschnitts vorstehendes Indikatorelement angeordnet ist, dessen freier Endbereich seine Position bei einer Verformung des Verformungsabschnitts aufgrund der Längskraftkomponente verändert. Das Indikatorelement kann beispielsweise als ein Stanz-Biegeteil oder als ein aus einem Grundkörper ausgeschnittenes Bauteil ausgestaltet sein. In der durch das Ausschneiden des Indikatorelements gebildeten Aussparung kann der mindestens eine Sensor angeordnet sein.

Hinsichtlich des mindestens einen Sensors sind verschiedene Messprinzipien möglich. So kann vorgesehen sein, dass der mindestens eine Sensor einen Abstandsensor und/oder einen Dehnungssensor, insbesondere einen Dehnungsmessstreifen, aufweist oder dadurch gebildet ist. Der mindestens eine Sensor kann ein kapazitiver oder optischer Sensor sein. Ein kapazitiver Sensor kann beispielsweise zu einer Abstandsmessung ausgestaltet und vorgesehen sein. Es ist möglich, dass mehrere Sensoren mit unterschiedlichen Messprinzipien vorgesehen sind. Die Kraftmesseinrichtung weist vorteilhaft mindestens zwei Sensoren auf, die unterschiedliche physikalische Messprinzipien aufweisen, zum Beispiel ein kapazitives und optisches Messprinzip oder dergleichen.

Die von dem mindestens einen Sensor der Kraftmesseinrichtung erfassbare Längskraftkomponente verläuft vorzugsweise bei Gebrauch horizontal. Beispielsweise handelt es sich bei der Längskraftkomponente um eine Zugkraft oder Schubkraft.

Es ist aber auch möglich, dass die Längskraftkomponente bei Gebrauch vertikal verläuft, sodass anhand des erfindungsgemäß ausgestalteten Tragbauteils beispielsweise eine Stützkraft messbar ist.

Es ist weiterhin möglich, dass die Längskraftkomponente bei Gebrauch schräg geneigt, d. h. schräg zur Vertikalen und schräg zur Horizontalen ist, sodass zugleich einerseits eine Schubkraft und eine Zugkraft und andererseits eine Stützkraft messbar sind.

Bevorzugt weist die Kraftmesseinrichtung mindestens zwei Sensoren auf, z.B. einen ersten Sensor und mindestens einen zweiten Sensor. Die mindestens zwei Sensoren können in Bezug auf die Längsachse einen Abstand zueinander aufweisen oder in Bezug auf die Längsachse dieselbe Längsposition aufweisen.

Möglich ist es, dass mindestens zwei Sensoren oder beide Sensoren zur Messung der Längskraftkomponente vorgesehen und ausgestaltet sind. Es ist aber auch möglich, dass mindestens ein Sensor der Kraftmesseinrichtung zur Messung der Querkraftkomponente vorgesehen ist.

Ein zur Messung einer Querkraftkomponente vorgesehener Sensor des Tragbauteils ist vorzugsweise an einem Betätigungsabschnitt neben dem Verformungsabschnitt angeordnet.

Es ist möglich, dass einer der beiden Sensoren ganz oder im Wesentlichen zur Messung der Längskraftkomponente ausgestaltet und/oder angeordnet ist, während ein anderer Sensor ganz oder im Wesentlichen zur Messung einer Querkraftkomponente der Lastkraft vorgesehen ist, deren Kraftrichtung quer, insbesondere rechtwinkelig, zu der Längsachse verläuft. Beispielsweise kann der erste Sensor im Wesentlichen zur Messung einer Zugkraft oder bei Gebrauch in X-Richtung oder Längsrichtung des Zugfahrzeugs verlaufenden Kraft vorgesehen sein, während der zweite Sensor im Wesentlichen zur Messung einer Stützkraft oder einer bei Gebrauch in Z-Richtung oder vertikaler Richtung verlaufenden Kraft vorgesehen ist. Der zweite Sensor oder ein dritter Sensor kann aber auch zur Messung einer quer zur Fahrtrichtung oder horizontal verlaufenden Kraft vorgesehen und/oder ausgestaltet sein.

Vorteilhaft ist vorgesehen, dass die Kraftmesseinrichtung einen ersten Sensor und mindestens einen zweiten Sensor aufweist, von denen einer zur Messung der mindestens einen Längskraftkomponente und der andere zur Messung mindestens einer quer zu der Längsachse wirkenden Querkraftkomponente der Lastkraft vorgesehen und ausgestaltet ist.

Weiterhin kann vorgesehen sein, dass die Kraftmesseinrichtung mindestens drei Sensoren aufweist, von denen einer zur Messung der mindestens einen Längskraftkomponente und die anderen zur Messung zweier quer zu der Längsachse, insbesondere rechtwinkelig, wirkenden und zueinander winkeligen, insbesondere rechtwinkeligen, Querkraftkomponenten der Lastkraft vorgesehen und ausgestaltet sind.

Vorteilhaft ist ferner vorgesehen, dass die Kraftmesseinrichtung mindestens einen Sensor aufweist, der ganz oder zumindest teilweise neben dem Verformungsabschnitt, insbesondere ganz oder teilweise an einem Betätigungsabschnitt, angeordnet ist

Vorteilhaft ist vorgesehen, dass das Tragbauteil oder die das Tragbauteil aufweisende Baueinheit (Anhängekupplung, Lastenträgern oder Anhänger) und/oder der mindestens eine Sensor eine Auswerteeinrichtung zur Auswertung mindestens eines Signals des mindestens einen Sensors, insbesondere integral, aufweist.

Weiterhin ist es vorteilhaft, wenn die Auswerteeinrichtung zur Auswertung eines Sensorsignals des mindestens einen Sensors der Kraftmesseinrichtung und zur Ausgabe eines die in Richtung der Längsachse wirkende Längskraftkomponente repräsentierenden Kraftsignals ausgestaltet ist.

Die Auswerteeinrichtung weist beispielsweise einen Mikroprozessor zur Verarbeitung von Signalen des mindestens einen Sensors und/oder einen Speicher zur Speicherung von Sensorsignalen auf. Bevorzugt ist es, wenn die Auswerteeinrichtung zur Auswertung von Signalen betreffend mindestens eine Kraftrichtung, vorzugsweise mindestens zwei Kraftrichtungen, ausgestaltet ist.

Eine zweckmäßige Maßnahme sieht vor, dass das Tragbauteil einen sich entlang der Längsachse oder im Wesentlichen entlang der Längsachse erstreckenden Grundschenkel und mindestens einen, vorzugsweise zwei, von dem Grundschenkel, insbesondere quer zu der Längsachse, abstehende Seitenschenkel aufweist. Es kann vorgesehen sein, dass das Tragbauteil in Seitenansicht bezüglich der Längsachse eine U-förmige oder W-förmige oder V-förmige oder Omega-förmige Gestalt aufweist.

Das Tragbauteil kann beispielsweise auch eine Kröpfung aufweisen oder als ein gekröpftes Bauteil ausgestaltet sein.

Das Tragbauteil kann Längsendbereiche aufweisen, die über den Verformungsabschnitt miteinander verbunden sind. Die Längsendbereiche können unmittelbar oder über Betätigungsabschnitte mit dem Verformungsabschnitt verbunden sein. Die Betätigungsabschnitte sowie der dazwischenliegende Verformungsabschnitt können z.B. eine im Wesentlichen U-förmige oder Omega-förmige Konfiguration bilden. Die Längsendbereiche sind beispielsweise mit einer Kupplungsvorrichtung und einer Deichsel verbunden. Die Längsendbereiche haben einen Längsabstand bezüglich der Längsachse zueinander und begrenzen zusammen mit dem Verformungsabschnitt eine Aussparung, beispielsweise eine Omega-förmige Aussparung. Der Längsabstand zwischen den Längsendbereichen in Bezug auf die Längsachse kann kleiner sein als eine projizierte Länge des Verformungsabschnitts bezüglich der Längsachse.

Vorteilhaft ist es, wenn der Verformungsabschnitt an dem Grundschenkel angeordnet ist oder durch den Grundschenkel gebildet ist und/oder mindestens einer der Seitenschenkel einen Betätigungsabschnitt zur Verformung des Verformungsabschnitts bildet.

Das Tragbauteil kann einen Bestandteil einer Zugkugelkupplung und/oder einer Deichsel eines Anhängers oder Lastenträgers bilden. Das Tragbauteil kann integral in die Zugkugelkupplung eingebaut sein, wobei ein Längsendbereich des Tragbauteils mit der Kugelpfanne der Zugkugelkupplung verbunden ist, während der andere Längsendbereich mit einer Deichsel des Anhängers verbunden oder verbindbar ist. Weiterhin kann das Tragbauteil beispielsweise an einem Tragegestell eines Lastenträgers vorgesehen sein.

Das Tragbauteil kann aber auch ein Bestandteil eines sich im am Zugfahrzeug montierten Zustand des Tragbauteils quer entlang eines Hecks des Zugfahrzeugs erstreckenden Querträgers der Trägeranordnung oder eines in Längsrichtung des Zugfahrzeugs erstreckenden Längsträgers der Trägeranordnung bilden.

Ein vorteilhaftes Konzept sieht vor, dass die mindestens eine Kraftmesseinrichtung zur Ausgabe eines die in Richtung der Längsachse wirkenden Kraftkomponente repräsentierenden Kraftsignals mit einer Antriebseinrichtung und/oder einer Bremseinrichtung verbunden ist, wobei die Antriebseinrichtung zum Antreiben des Anhängers oder die Bremseinrichtung zum Bremsen des Anhängers anhand des Kraftsignals ausgestaltet ist. Somit ist beispielsweise ein unmittelbares Bremsen oder Beschleunigen des Anhängers möglich. Bei der Bremseinrichtung kann es sich um eine Reibbremse handeln, aber auch um eine Bremseinrichtung, die einen Bestandteil eines Antriebsmotors oder einer Antriebseinrichtung des Anhängers bildet.

Bevorzugt ist es, wenn ein Sensorelement des mindestens einen Sensors mit mindestens einer Referenzfläche fest verbunden ist. Die Referenzfläche ist beispielsweise an dem vorgenannten Indikatorelement vorgesehen. Beispielsweise kann ein kapazitives, induktives oder optisches Sensorelement direkt mit der Referenzfläche verbunden sein. Es ist zum Beispiel möglich, einen Dehnungsmessstreifen mit einander gegenüberliegenden Referenzflächen der Aussparung zu verbinden, sodass dieser bei Belastung des Stützabschnitts und somit Veränderung des Abstands zwischen den Referenzflächen gedehnt oder gestaucht wird.

Das Tragbauteil gemäß der Erfindung kann beispielsweise als strukturiertes Massivumformteil und/oder Massivumformteil ausgestaltet sein.

Das Tragbauteil besteht vorteilhaft aus Metall, insbesondere Stahl, Aluminium oder dergleichen.

Weiterhin ist es möglich, dass der Verformungsabschnitt und der mindestens eine Betätigungsabschnitt beispielsweise durch kraftschlüssige und/oder formschlüssige Verbindung miteinander verbunden sind. So eignet sich beispielsweise eine Schraubverbindung zur Verbindung von Verformungsabschnitt und einem oder mehreren Betätigungsabschnitten.

Das Tragbauteil kann einen Aufnahmeraum oder Kabelkanal zur Aufnahme für Kabel aufweisen. Beispielsweise kann ein Aufnahmekanal oder Kabelkanal an dem Tragbauteil vorgesehen sein, in welchem eine oder mehrere Anschlussleitungen der Kraftmesseinrichtung aufgenommen sind.

Vorteilhaft ist bei dem Tragbauteil vorgesehen, dass es zum Halten eines elektrischen Kabels, welches vorteilhaft mit dem mindestens einen Sensor elektrisch verbunden ist, mindestens einen Kabelkanal, insbesondere mit einem T-förmigen oder Doppel-T-förmigen Querschnitt, zur Aufnahme des elektrischen Kabels.

Vorteilhaft ist bei dem Tragbauteil vorgesehen, dass es mindestens eine Aussparung oder Bohrung zur Aufnahme eines Halteelements aufweist, welches zum Halten eines elektrischen Kabels vorgesehen ist. Es können z.B. Bohrungen, Aussparungen oder dergleichen, beispielsweise für Tannenzapfen-Halter oder dergleichen, an dem Tragbauteil vorgesehen sein.

Vorteilhaft ist vorgesehen, dass der mindestens eine Sensor und/oder das Tragbauteil durch ein Schutzgehäuse, insbesondere in Gestalt eines Faltenbalges oder Schutzschlauches oder zweier miteinander verbundener Gehäuseteile oder Gehäuseschalen, gekapselt ist.

Die Kraftmesseinrichtung kann ganz oder teilweise gekapselt sein, beispielsweise mit einem Faltenbalg, einem Schutzschlauch, einem Schalen-Gehäuse, anhand von miteinander verbundenen Halbschalen oder dergleichen. Die Gehäusebauteile können miteinander vernietet und/oder verschweißt und/oder verklebt und/oder verrastet, beispielsweise verclipst oder dergleichen, sein. Ferner ist es vorteilhaft, dass ein Tragbauteil gemäß der Erfindung ganz oder im Wesentlichen bezüglich seiner Längserstreckung in einem Schutzgehäuse angeordnet ist, welches das Tragbauteil quer zu seiner Längserstreckung ganz oder im Wesentlichen ummantelt.

Nachfolgend werden Ausführungsbeispiele der Erfindung anhand der Zeichnung erläutert. Es zeigen:
- Figur 1: eine perspektivische Schrägansicht eines Teiles eines Gespanns bestehend aus einem Zugfahrzeug mit einer Anhängekupplung und eines Teils eines Anhängers mit einem erfindungsgemäßen Tragbauteil,
- Figur 2: eine schematische Seitenansicht des Gespanns gemäß Figur 1 im in Richtung einer Längsachse belasteten Zustand,
- Figur 3: das Gespann gemäß Figur 2 im in Richtung der Längsachse unbelasteten Zustand,
- Figur 4: eine perspektivische Schrägansicht eines weiteren Gespanns mit einer Anhängekupplung und einem Teil eines Anhängers,
- Figur 5: eine perspektivische Schrägansicht eines weiteren Gespanns mit einer Anhängekupplung an einem Teil eines Anhängers,
- Figur 6: ein weiteres Tragbauteil mit quer zur Längsachse auslenkbaren Komponenten seines Verformungsabschnitts in einem in Richtung die Längsachse auf Zug belasteten Zustand,
- Figur 7: das Tragbauteil gemäß Figur 6 in einem in Längsrichtung auf Schub belasteten Zustand oder einem unbelasteten Zustand bezüglich der Längsachse,
- Figur 8: ein weiteres Tragbauteil in der Art einer Ziehharmonika-Struktur,
- Figur 9: eine Detailansicht eines Sensors einer Kraftmesseinrichtung des Anhängers gemäß Figur 1 als Seitenansicht,
- Figur 10: eine Draufsicht auf den Sensor gemäß Figur 9,
- Figur 11: eine Schnittdarstellung des Sensors gemäß Figur 10, etwa entlang einer Schnittlinie X-X in Figur 10,

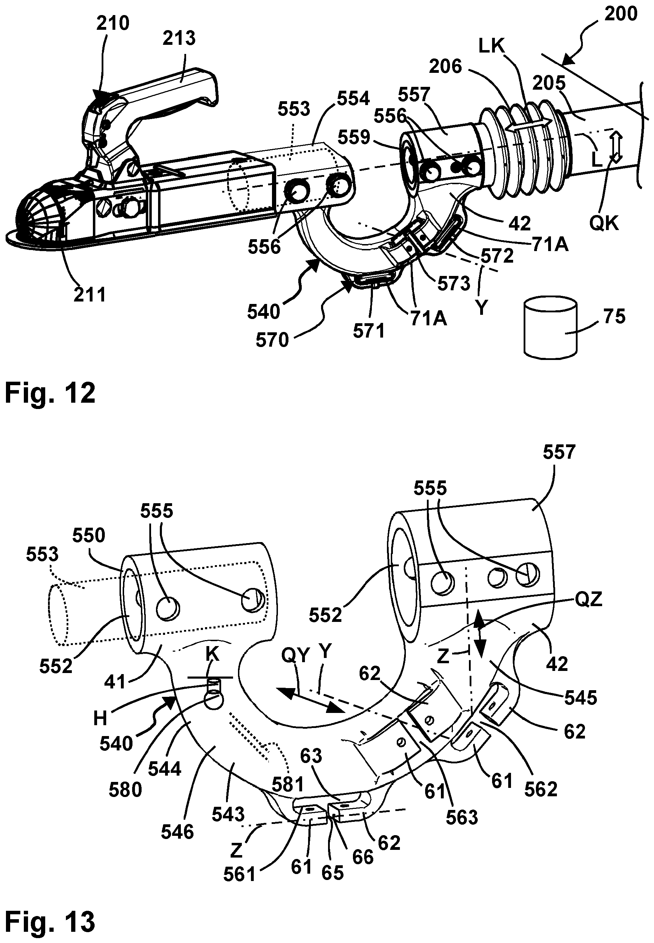

- Figur 12: eine perspektivische Schrägansicht eines vorderen Teils eines Anhängers mit einem weiteren Tragbauteil, welches in
- Figur 13: perspektivisch einzeln dargestellt ist.

Ein Zugfahrzeug 100 mit einer Karosserie 101 und Rädern 102 ist auf einem Untergrund U in an sich bekannter Weise verfahrbar. Das Zugfahrzeug 100 ist beispielsweise ein Elektrofahrzeug, ein Fahrzeug mit Verbrennungsmotor oder dergleichen. Bei dem Zugfahrzeug 100 kann es sich um einen Personenkraftwagen, einen Lastkraftwagen oder dergleichen handeln.

Am Heck der Karosserie 101 ist eine Trägeranordnung 20 angeordnet, die einen quer zur Längsachse des Zugfahrzeugs 100 verlaufenden Querträger 21 aufweist, wobei der Querträger 21 anhand von Längsträgern 22, die im Wesentlichen in Richtung der Längsachse des Zugfahrzeugs 100 verlaufen, an der Karosserie 101 befestigt ist.

Der Querträger 21 dient zum Tragen einer Kupplungshalterung 23, an der ein Kupplungsarm 24 einer Anhängekupplung 30 angeordnet ist. Die Kupplungshalterung 23 trägt den Kupplungsarm 24, der beispielsweise fest an der Kupplungshalterung 23 befestigt sein kann. Vorliegend ist der Kupplungsarm 24 anhand einer Verbindungseinrichtung lösbar mit der Kupplungshalterung 23 verbunden. Die Verbindungseinrichtung umfasst beispielsweise einen Steckvorsprung 27, der in eine Steckaufnahme 26 der Kupplungshalterung 23 eingreift. Alternativ könnte die Kupplungshalterung 23 beispielsweise auch ein Lager zum Lagern des Kupplungsarms 24 zwischen einer bei Gebrauch vor das Heck des Zugfahrzeugs 100 vorstehenden Gebrauchsstellung, die zum Anhängen eines Anhängers geeignet ist, und einer Nichtgebrauchsstellung, bei der der Kupplungsarm 24 näher an die Karosserie 101 heran bewegt ist. Das Lager kann beispielsweise ein Schwenklager, Schiebelager oder eine Kombination davon umfassen. Am freien Endbereich des Kupplungsarms 24 ist ein Kuppelelement 25, beispielsweise eine Kupplungskugel, zum Anhängen eines nachfolgend noch beschriebenen Anhängers 200 oder eines in der Zeichnung nicht dargestellten Lastenträgers angeordnet.

Der Anhänger 200 weist eine Karosserie 201, beispielsweise zum Transportieren einer Last, eine Kabine für Personen oder dergleichen auf. Die Karosserie 201 kann beispielsweise eine Lademulde zum Laden einer Last sein. Der Anhänger 200 ist auf Rädern 202 auf dem Untergrund U rollbar. Die Räder 202 können nicht angetriebene Räder sein oder wie beim Ausführungsbeispiel durch eine Antriebseinrichtung 203 antreibbare und/oder bremsbare Räder. Die Antriebseinrichtung 203 kann beispielsweise einen Antriebsmotor und/oder Bremskörper oder dergleichen umfassen.

Das Zugfahrzeug 100 und der Anhänger 200 bilden ein Gespann 10.

Beispielsweise hat der Anhänger 200 einen Energiespeicher 207, insbesondere eine wiederaufladbare Batterie, zum Betreiben der Antriebseinrichtung 203. Somit kann der Anhänger 200 beispielsweise bei einem Zugbetrieb durch das Zugfahrzeug 100 unterstützend angetrieben sein, sodass ein in der Zeichnung nicht dargestellter Energiespeicher des Zugfahrzeugs 100, beispielsweise ebenfalls eine Batterie, weniger belastet oder geschont wird.

Vor die Karosserie 201 steht eine Deichsel 205 vor, an deren freiem Endbereich eine Kupplungsvorrichtung 210, beispielsweise eine Zugkugelkupplung, zum lösbaren Ankuppeln an das Kuppelelement 25 angeordnet ist. Die Kupplungsvorrichtung 210 umfasst beispielsweise eine Kupplungsaufnahme 211, in die das Kuppelelement 25 eingreifen kann, sowie einen Verschlusskörper 212, beispielsweise eine sogenannte Schließbacke, zum Verschließen der Kupplungsaufnahme 211, welche anhand einer Betätigungseinrichtung 213 betätigbar ist, beispielsweise anhand eines Handhebels.

An der Deichsel 205 ist vorzugsweise eine Auflaufbremse 206 angeordnet, die schematisch dargestellt ist. Die Auflaufbremse 206 kann beispielsweise in Richtung einer Längsachse L auf die Deichsel 205 wirkende Schubkräfte des Anhängers 200 durch Bremsen der Räder 202 verringern.

Auf die Deichsel 205 wirkt eine Lastkraft mit einer Längskraftkomponente LK, die parallel zu einer Längsachse L verläuft oder orientiert ist, und mit einer Querkraftkomponente QK, die quer zur Längsachse L orientiert ist, beispielsweise rechtwinkelig quer. Die Längskraftkomponente LK entspricht beispielsweise einer beim Betrieb des Gespanns 10 einer im Wesentlichen horizontalen Zugkraft oder Schubkraft, die der Anhänger 200 auf die Deichsel 205 und somit auf das Zugfahrzeug 100 ausübt, während die Querkraftkomponente QK einer Stützkraft entspricht, die im Wesentlichen vertikal verläuft. Die Deichsel 205 überträgt die Längskraftkomponente LK und die Querkraftkomponente QK der Lastkraft des Anhängers 200 auf die Anhängekupplung 30.

Eine Kraftmessung der Längskraftkomponente im Bereich der Deichsel 205, die parallel zur Längsachse L verläuft, ist nahezu nicht messbar, da die Deichsel 205 parallel zu ihrer Längsachse oder in Richtung ihrer Längsachse wohl beim Schubbetrieb als auch beim Zugbetrieb des Gespanns 10 nahezu keine Verformung in Bezug auf ihre Längsachse erfährt. Allenfalls eine Messung einer Querkraft, beispielsweise einer Stützkraft, wäre im Bereich der Deichsel 205 möglich und wird beispielsweise in der eingangs genannten WO 2017/162 634 A1 beschrieben.

Zu einer Messung der Längskraftkomponente LK ist eine Kraftmesseinrichtung 70 an einem Tragbauteil 40 vorgesehen. Das Tragbauteil 40 ist mit seinem einen Längsendbereich 41 mit der Kupplungsvorrichtung 210 fest verbunden, mit seinem anderen Längsendbereich 42 mit der Deichsel 205 fest verbunden. Der Längsendbereich 42 kann beispielsweise einen integralen Bestandteil oder einen vorderen Abschnitt der Deichsel 205 bilden. Das Tragbauteil 40 überträgt die Längskraftkomponente LK und die Querkraftkomponente QK der Lastkraft des Anhängers 200 auf die Anhängekupplung 30.

Die Längsachse L verläuft beispielsweise entlang einer neutralen Faser der Längsendbereiche 41, 42.

Zwischen den Längsendbereichen 41, 42 ist ein Verformungsabschnitt 43 vorgesehen. Der Verformungsabschnitt 43 ist anhand von Betätigungsabschnitten 44, 45 mit den Längsendbereichen 41, 42 verbunden. Die Betätigungsabschnitte 44, 45 verlaufen im Wesentlichen quer zur Längsachse L, zum Beispiel rechtwinkelig oder etwa rechtwinkelig quer zur Längsachse L. Der Betätigungsabschnitt 44 ist anhand von Bogenabschnitten oder Krümmungsabschnitten 46 und 47 mit dem Verformungsabschnitt 43 und dem Längsendbereich 41 verbunden. Der Betätigungsabschnitt 45 ist mit einem Krümmungsabschnitt oder Bogenabschnitt 47 mit dem Verformungsabschnitt 43 und mit einem weiteren Bogenabschnitt 49 mit dem Längsendbereich 42 verbunden.

Der Verformungsabschnitt 43 erstreckt sich entlang einer Längsachse L2 zwischen den Bogenabschnitten oder Krümmungsabschnitten 46, 47. Die Längsachse L2 hat einen Querabstand zur Längsachse L.

In Seitenansicht hat das Tragbauteil 40 eine U-förmige Gestalt. Das Tragbauteil 40 kann einen integralen Bestandteil der Deichsel 205 bilden. Beispielsweise ist ein Profilkörper 50 der Deichsel 205 im Bereich des Tragbauteils 40 abgekröpft.

An dem Verformungsabschnitt 43 ist ein Sensor 71 und am Längsendbereich 41 ist ein Sensor 72 der Kraftmesseinrichtung 70 angeordnet. Der Sensor 71 dient vorrangig der Erfassung der Längskraftkomponente LK, während der Sensor 72 vorrangig zur Erfassung der Querkraftkomponente QK dient.

Der Sensor 71 ist an einer in Gebrauchslage oberen Wandfläche 51 des Profilkörpers 50 bzw. des Verformungsabschnitt 43 angeordnet. Der Sensor 72 ist an einer in Gebrauchslage unteren Wandfläche 52 des Profilkörpers 50 am Längsendbereich 41 angeordnet.

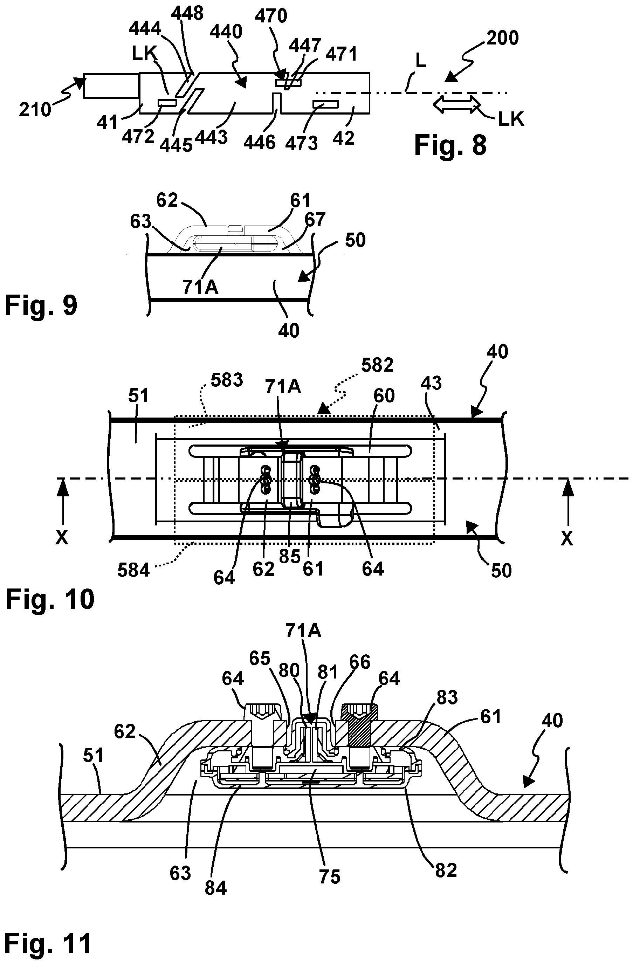

Die Sensoren 71, 72 kommunizieren über Verbindungen 73, 74, beispielsweise Leitungsverbindungen, drahtlose Verbindungen oder dergleichen, mit einer Auswerteeinrichtung 75. Die Auswerteeinrichtung 75 könnte prinzipiell an einer der Sensoren 71 oder 72 angeordnet sein, d. h. lokal am Sensor selbst, was beim Ausführungsbeispiel gemäß Figuren 9-11 angedeutet ist.

Die Auswerteeinrichtung 75 umfasst beispielsweise eine Eingangsschnittstelle 76, einen Prozessor 77 zur Verarbeitung von Sensorsignalen der Sensoren 71, 72. Der Prozessor 77 ist mit einem Speicher 78 der Auswerteeinrichtung 75 verbunden und kann beispielsweise Programmcode eines Programmmoduls M laden und ausführen, welches in dem Speicher 78 gespeichert ist.

Anhand der Sensorsignale der Sensoren 71, 72 kann die Auswerteeinrichtung 75 beispielsweise Kraftsignale erzeugen, die die Längskraftkomponente LK und die Querkraftkomponente QK repräsentieren.

Beispielsweise übermittelt die Auswerteeinrichtung 75 an einer Ausgabeschnittstelle 79 mindestens ein Kraftsignal, welches die Längskraftkomponente LK repräsentiert, an eine Steuerungseinrichtung 204 zur Steuerung und/oder Regelung der Antriebseinrichtung 203. Beispielsweise kann die Steuerungseinrichtung 204 die Antriebseinrichtung 203 derart ansteuern, dass die von der Auswerteeinrichtung 75 ermittelte Längskraftkomponente LK null oder im Wesentlichen null ist. Somit ist das Zugfahrzeug 100 durch den Anhänger 200 nicht oder nur unwesentlich in Bezug auf eine Zuglast oder Schublast belastet.

Die Betätigungsabschnitte 44, 45 bewirken eine Verformung des Verformungsabschnitts 43. Beispielsweise werden die Betätigungsabschnitte 44, 45 bei einer Zugbelastung in Richtung der Längsachse L oder parallel zur Längsachse L an ihren mit den Längsendbereichen 41, 42 verbundenen Längsenden voneinander weg belastet, bei einer Schubbelastung in Richtung der Längsachse L oder parallel zur Längsachse L zueinander hin belastet. Beispielsweise kann mindestens ein Abstandssensor 171, der im Bereich der mit den Längsendbereichen 41, 42 verbundenen Abschnitte der Betätigungsabschnitte 44, 45 angeordnet ist, beispielsweise an den Krümmungsabschnitten 48 und 49, den Abstand zwischen diesen Krümmungsabschnitten 48 und 49 oder den Abstand zwischen den Längsendbereichen 41, 42 bezüglich der Längsachse L erfassen.

Weiterhin wird bei einer Zugbelastung oder Druckbelastung der mit den Längsendbereichen 41, 42 verbundenen Enden der Betätigungsabschnitte 44, 45 der Verformungsabschnitt 43 verformt. Beispielsweise wird bei einer Zugbelastung parallel zur Längsachse L durch die Längskraftkomponente LK die obere Wandfläche 51 nach oben gewölbt (was in der Zeichnung überhöht dargestellt ist) und somit gelängt. Bei einer Druckbelastung parallel zur Längsachse L durch die Längskraftkomponente LK wird die obere Wandfläche 51 nach unten gewölbt und somit verkürzt. Eine derartige Längenänderung betätigt den Sensor 71, sodass dieser ein die Längskraftkomponente LK repräsentierendes Sensorsignal an die Auswerteeinrichtung 75 übermitteln kann.

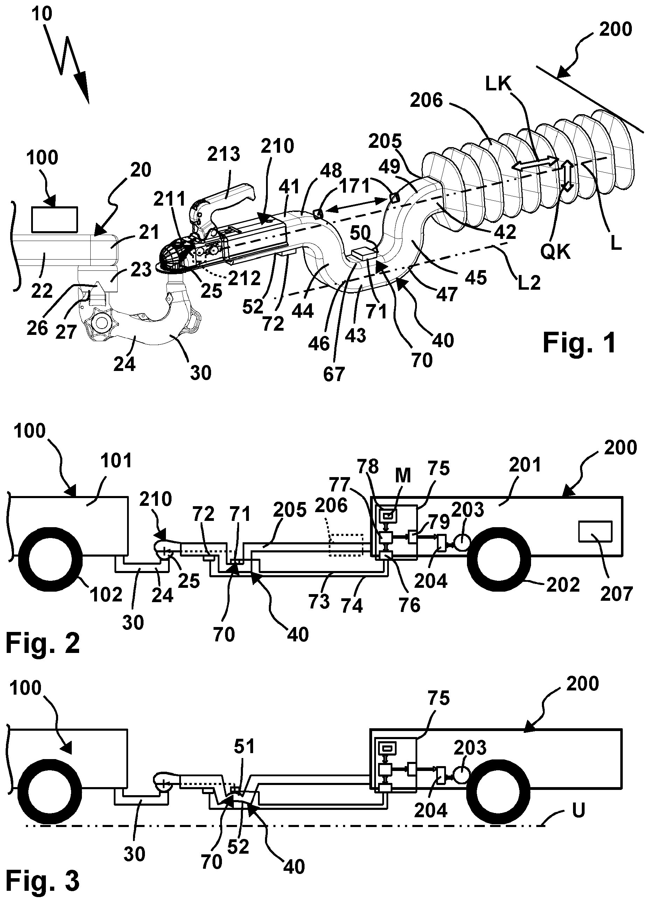

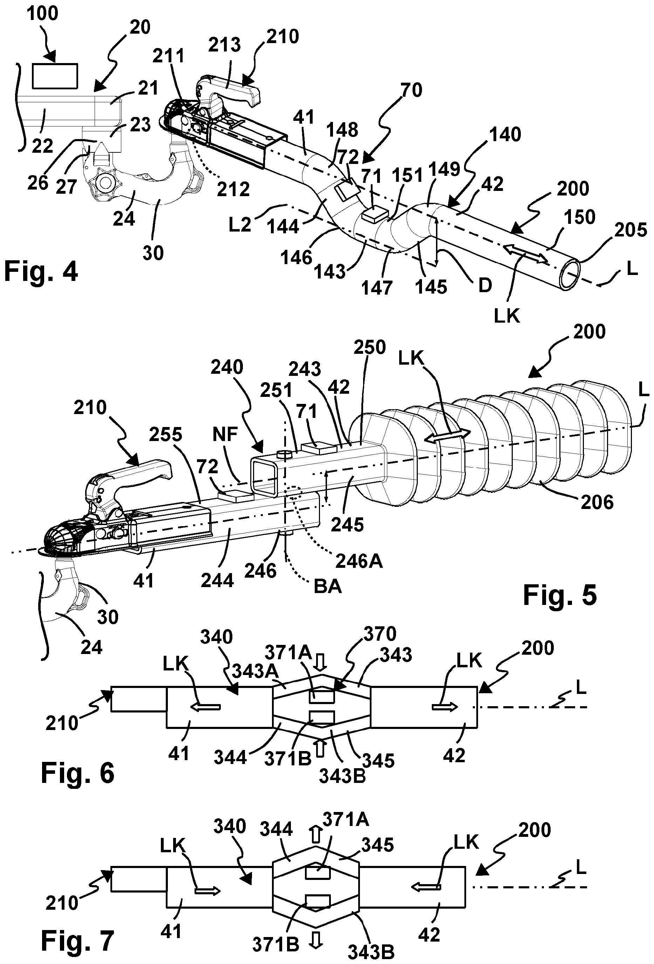

Bei dem in Figur 4 dargestellten Ausführungsbeispiel sind gleiche oder ähnliche Komponenten wie beim Ausführungsbeispiel gemäß Figuren 1-3 mit denselben Bezugsziffern versehen, abweichende Komponenten mit um 100 vergrößerten Bezugsziffern.

Zwischen der Kupplungsvorrichtung 210 und der Deichsel 205 ist ein Tragbauteil 140 angeordnet, welches einen Verformungsabschnitt 143 zwischen seinen Längsendbereichen 41, 42 aufweist. Zwischen dem Verformungsabschnitt 143 und den Längsendbereichen 41, 42 sind Betätigungsabschnitte 144, 145 angeordnet, die mit dem Verformungsabschnitt 143 über Krümmungsabschnitte oder Bogenabschnitte 146, 147 und mit den Längsendbereichen 41, 42 über Krümmungsabschnitte oder Bogenabschnitte 148, 149 fest verbunden sind.

Die Betätigungsabschnitte 144, 145 verlaufen schräg quer zu der Längsachse L. Der Verformungsabschnitt 143 verläuft entlang einer Längsachse L2 parallel zur Längsachse L. Entsprechend dem Schrägverlauf der Betätigungsabschnitte 144, 145 sind auch die Bogenabschnitte 146-149 weniger stark gekrümmt oder erstrecken sich über einen kleineren Winkelbereich als die Bogenabschnitte 46-49.

Am Verformungsabschnitt 143 ist der bereits erläuterte Sensor 71 angeordnet. Anders als beim Tragbauteil 40 ist jedoch der Sensor 72 nicht am Längsendbereich 41, sondern an einem der Betätigungsabschnitte 144 oder 145, beim konkreten Ausführungsbeispiel am Betätigungsabschnitt 144, angeordnet. Bei einer Zugbelastung oder Druckbelastung entlang der Längsachse L oder parallel zur Längsachse L, also einer Belastung mit der Längskraftkomponente LK bewegen sich die Längsendbereiche 41, 42 des Tragbauteils 140 voneinander weg oder zueinander hin. Zugleich betätigen die Betätigungsabschnitte 144, 145 den Verformungsabschnitt 143 derart, dass beispielsweise eine obere Wandfläche 151 eines den Verformungsabschnitt 143 bildenden Profilkörpers 150 ähnlich wie in Figur 2 dargestellt gewölbt wird.

Die einzelnen Abschnitte der Tragbauteile 40, 140 sind einstückig. Insbesondere sind die Tragbauteile 40, 140 durch ein einziges, jedoch quer zur Längsachse L verformtes Profilteil oder einen quer zur Längsachse L verformten Profilkörper gebildet. Beispielsweise sind die Tragbauteile 40, 140 durch Hohlprofilkörper gebildet, wobei im Falle des Tragbauteils 40 der Hohlprofilkörper einen im Wesentlichen rechteckigen oder quadratischen Querschnitt aufweist, während das Tragbauteil 140 einen Hohlprofilkörper mit einem runden Querschnitt aufweist.

Ein Tragbauteil 240 weist mehrere Profilkörper oder Tragelemente auf, beispielsweise Tragelemente 250, 255, die fest miteinander verbunden sind, so dass sie die Längskraftkomponente LK und die Querkraftkomponente QK der Lastkraft zwischen dem Anhänger 200 und der Anhängekupplung 30 übertragen können. Die Tragelemente 250, 255 sind z.B. durch eine Verbindungseinrichtung 246, beispielsweise eine Schraubverbindung, miteinander verbunden.

Das Tragelement 250, beispielsweise ein Rohrprofil oder Profilkörper, erstreckt sich entlang der Längsachse L, das Tragelement 255, beispielsweise ebenfalls ein Rohrprofil oder ein Profilkörper, erstreckt sich parallel zu der Längsachse L entlang einer Längsachse L2. Mithin haben also die Tragelemente 250 bzw. deren neutrale Faser NF einen Querabstand bezüglich der Längsachse L. Die Tragelemente 250, 255 weisen vorzugsweise identische oder gleichartige Profilkörper auf.

Die Verbindungseinrichtung 246 umfasst beispielsweise einen Schraubbolzen, der sich entlang einer Bolzenachse BA quer der Längsachse L erstreckt. Der Bolzen erstreckt sich quer durch die Tragelemente 250, 255 hindurch, sodass er beispielsweise an seinen Längsenden angeordnete Stützkonturen, zum Beispiel Köpfe, Muttern oder dergleichen, an einander entgegengesetzten Außenwänden der Tragelemente 250, 255, beispielsweise einer in Gebrauchslage oberen Wand des Tragelements 250 und einer in Gebrauchslage unteren Wand des Tragelements 255 anliegen und/oder sich daran abstützen.

Alternativ zu der Verbindungseinrichtung 246 kann auch eine stoffschlüssige Verbindung 246A, insbesondere eine Klebeverbindung oder Schweißverbindung, zwischen den Tragelementen 250, 255, beispielsweise an einander anliegenden Wänden derselben, vorgesehen sein.

Das Tragelement 255 bildet beispielsweise einen Betätigungsabschnitt 244, das Tragelement 250 beispielsweise einen Betätigungsabschnitt 245. Eine Wandfläche 251, beispielsweise eine obere Wandfläche des Tragelements 250, bildet einen Verformungsabschnitt 243. An dem Verformungsabschnitt 243, mithin also am Tragelement 250, ist der Sensor 71 angeordnet, welcher zur Erfassung der Längskraftkomponente LK vorgesehen ist. An dem Tragelement 255, beispielsweise dessen oberer Wand, ist der Sensor 72 angeordnet, welcher insbesondere zur Erfassung einer quer zur Längsachse L wirkenden Querkraftkomponente QK vorgesehen ist.

Durch den Versatz oder Abstand der Längsachsen L und L2 wirkt der Betätigungsabschnitt 244 in der Art eines Hebels auf den Verformungsabschnitt 243, d. h. der Verformungsabschnitt 243 wird quer zur Längsachse L verformt, beispielsweise gewölbt, sodass er eine Längung oder Kürzung erfährt, die durch den Sensor 71 erfassbar ist.

Bei einem Tragbauteil 340 ist das erfindungsgemäße Konzept zur Erfassung einer Längskraftkomponente LK beispielsweise durch einen Verformungsabschnitt 343 realisiert, an dem eine Kraftmesseinrichtung 370 mit Sensoren 371A, 371B angeordnet ist.

Der Verformungsabschnitt 343 weist beispielsweise nebeneinander zwischen den Längsendbereichen 41 und 42 verlaufende Tragteilen 343A und 343B auf.

Die Tragteile 343A und 343B weisen jeweils Betätigungsabschnitte 344 und 345 auf. Die Betätigungsabschnitte 344 und 345 verlaufen schräg zur Längsachse L und erstrecken sich zwischen Längsendbereichen 41, 42 des Tragbauteils 43. Beispielsweise sind die Betätigungsabschnitte 344, 345 durch Auswölbungen, Ausformungen oder dergleichen eines Grundkörpers oder Profilkörpers des jeweiligen Tragteils 343A und 343B gebildet. Vorteilhaft sind die Tragteile 343A und 343B V-förmig oder U-förmig.

Beispielsweise sind der Sensor 371A an dem Tragteilen 343A und der Sensor 371B an dem Tragteilen 343B angeordnet.

Die Sensoren 371A, 371B sind beispielsweise an den Betätigungsabschnitten 344, 345 angeordnet. Die Sensoren 371A, 371B sind beispielsweise in einem Verbindungsbereich oder Übergangsbereich, in welchem die Betätigungsabschnitte 344, 345 aneinander angrenzen und miteinander verbunden sind, angeordnet.

Man erkennt aus der schematischen Zeichnung, dass durch eine in Richtung der Längsachse L wirkenden Zugkraft als Längskraftkomponente LK die Neigung der Betätigungsabschnitte 344, 345 quer zur Längsachse L kleiner wird, diese also sozusagen bezüglich der Längsachse L weniger schräg geneigt sind, während bei einer in Richtung der Längsachse L wirkenden Schubkraft oder Druckkraft der Längskraftkomponente LK die Betätigungsabschnitte 344, 345 voneinander weg bewegt werden. Die jeweilige Längung oder Kürzung der Betätigungsabschnitte 344, 345 und/oder ein kleinerer Querabstand quer zur Längsachse L zwischen den Betätigungsabschnitten 344, 345 ist durch die Sensoren 371A, 371B erfassbar.

Ein Tragbauteil 440 ist in der Art einer Ziehharmonika bezüglich der Längsachse L ausgestaltet.

Das Tragbauteil 440 weist mehrere Aussparungen 444, 445, 446, 447, die exemplarisch und schematisch dargestellt sind, auf. Die Aussparungen 444, 445, 446, 447 verlaufen quer zur Längsachse L. Die Aussparungen 444, 445, 446, 447 verlaufen ausgehend von einem Außenumfang des Tragbauteils 440.

Die Aussparungen 444, 445, 446, 447 bilden Schwächungskonturen 448 zur Bereitstellung einer geringeren Steifigkeit des Tragbauteils 440 bezüglich der Längsachse L.

Das Tragbauteil 440 stellt sozusagen insgesamt einen Verformungsabschnitt 443 dar, welcher in Bezug auf die Längsachse L durch eine Längskraftkomponente LK, die parallel zur Längsachse L wirkt, in der Art einer Ziehharmonika ausgelenkt werden kann. Beispielweise kann ein Sensor 471 einer Kraftmesseinrichtung 470 an einer der Aussparungen 444, 445, 446, 447, beispielsweise der Aussparung 447 angeordnet sein. Aber auch eine Längung oder Kürzung des Tragbauteils 440 zwischen seinen Längsendbereichen 41 und 42 ist ohne weiteres sensorisch erfassbar, beispielsweise durch einen oder mehrere Abstandssensoren 472, 473, die an den Längsendbereichen 41 oder 42 angeordnet sind.

Die Sensoren 71, 72 können beispielsweise in der Art von Dehnungsmessstreifen ausgestaltet sein. Sie können an einer Wandfläche des Tragbauteils 40, 140, 240, 340, 440 angeordnet sein, beispielsweise an diese angeklebt, mit dieser verschraubt, vercrimpt oder dergleichen.

Es ist aber auch möglich, dass ein Sensor einer erfindungsgemäßen Kraftmesseinrichtung in einer Aussparung an dem jeweiligen Tragbauteil angeordnet ist, was am Ausführungsbeispiel eines Sensors 71A deutlich wird.

Beispielsweise ist an dem Tragbauteil 40, insbesondere an der Wandfläche 51 des Profilkörpers 50, eine Aussparung 60 an einem Montageort 67 für den Sensor 71A vorgesehen, in oder an der der Sensor 71A angeordnet ist. Von Längsendbereichen der Aussparung 60 weg erstrecken sich Indikatorelemente 61, 62 in der Art von Zungen. Freie Endbereiche der Indikatorelemente 61, 62 weisen Referenzflächen 65, 66 auf. Die Referenzflächen 65, 66 liegen einander beispielsweise gegenüber. Die freien Endbereiche der Indikatorelemente 61, 62 weisen einen Abstand quer zur Längsachse L zu der Wandfläche 51 auf. Somit ist unterhalb der Indikatorelemente 61, 62 ein Aufnahmeraum 63 für den Sensor 71A vorhanden.

Der Sensor 71A weist ein Gehäuse 82 auf, welches fest mit den Indikatorelementen 62, 61 verbunden ist, beispielsweise anhand einer Klebeverbindung oder wie beim Ausführungsbeispiel anhand einer Schraubverbindung mittels Schrauben 64. Somit wird eine Relativbewegung der Indikatorelemente 61, 62 auf das Gehäuse 82 und mithin in dem Gehäuse 82 angeordnete Sensorelemente 80, 81 des Sensors 71A übertragen. Die Sensorelemente 81, 80 sind beispielsweise Sensorelemente zur Erfassung eines Abstands, beispielsweise kapazitive Sensorelemente, deren Signale durch die an Bord und in dem Gehäuse 82 angeordnete Auswerteeinrichtung 75 auswertbar ist. Das Gehäuse 82 weist beispielsweise ein Gehäuseoberteil 83 sowie ein Gehäuseunterteil 84 auf, die dicht miteinander verbunden sind. Das Gehäuse 82 bildet beispielsweise ein Kapselgehäuse, welches die elektronischen und elektrischen Komponenten des Sensors 71A kapselt und vor Umwelteinflüssen schützt.

Ein weiteres, anstelle der Tragbauteile 40-440 einsetzbares Tragbauteil 540 ist nachfolgend im Zusammenhang mit dem Anhänger 200 erläutert. Das Tragbauteil 540 ist zwischen der Kupplungsvorrichtung 210 und der Deichsel 205 des Anhängers 200 angeordnet.

Das Tragbauteil 540 weist Längsendbereiche 41, 40 auf, zwischen denen sich ein Verformungsabschnitt 543 befindet. Die Längsendbereiche 41, 42 sind über Betätigungsabschnitte 544, 545 mit dem Verformungsabschnitt 543 verbunden. Die Betätigungsabschnitte 544, 545 sowie der dazwischenliegende Verformungsabschnitt 543 bilden eine im Wesentlichen U-förmige Konfiguration.

An den Längsendbereichen 41, 42 sind Verbindungsabschnitte 550, 557 angeordnet, die zur Verbindung mit der Kupplungsvorrichtung 210 bzw. der Deichsel 205 dienen. Beispielsweise weist die Kupplungsvorrichtung 210 ein Verbindungselement 553 sowie einen Stützkörper 554 auf, zwischen denen der Verbindungsabschnitt 550, z.B. sandwichartig, angeordnet ist.

Das Verbindungselement 553 ist beispielsweise ein Rohrkörper, welcher in eine Aufnahme 552 eines Rohrabschnitts 551 des Verbindungsabschnitts 550 eingreift. Das Verbindungselement 553 ist beispielsweise in der Art eines Rohrkörpers oder Profilkörpers ausgestaltet, der in die Aufnahme 552 eingreift.

Der Stützkörper 554 kann in der Art eines Stützmantels den Verbindungsabschnitt 550 bzw. Rohrabschnitt 551 übergreifen. An dem Verbindungsabschnitt 550 sind weiterhin Schraubaufnahmen 555, beispielsweise in Bezug auf die Längsachse L nebeneinander angeordnete Schraubaufnahmen 555, vorgesehen, die mit in der Zeichnung nicht näher bezeichneten Schraubaufnahmen oder Durchtrittsöffnungen am Verbindungselement 553 und am Stützkörper 554 fluchten, so dass die Schraubaufnahmen 555 durchdringende Schrauben 556 den Verbindungsabschnitt 550 mit dem Verbindungselement 553 und dem Stützkörper 554 verbinden. Schraubabschnitte der Schrauben 556 sind beispielsweise in das Verbindungselement 553 eingeschraubt oder durchdringen dasselbe und sind insbesondere, dann, wenn sie nur durch das Verbindungselement 553 durchgesteckt sind, an vom jeweiligen Kopf der Schraube 556 abgewandten Ende in eine Mutter eingeschraubt, die in der Zeichnung nicht sichtbar ist.

Die Deichsel 206 weist ein Verbindungselement 559 auf, welches in eine Aufnahme 552 des Verbindungsabschnitts 557 eingreift. Auch der Verbindungsabschnitt 557 weist Schraubaufnahmen 555 auf, die dem Verbindungsabschnitt 557 sowie das in der Aufnahme 552 eines Rohrabschnitts 558 des Verbindungsabschnitts 557 aufgenommene Verbindungselement 559 durchdringen und dieses somit fest mit dem Verbindungsabschnitt 557 verbinden.

Der Verformungsabschnitt 543 und/oder die Betätigungsabschnitte 544, 545 können beispielsweise durch einen Profilkörper oder Rohrkörper gebildet sein. Es ist aber auch möglich, dass der Verformungsabschnitt 553 und/oder die Betätigungsabschnitt 544, 545 durch ein massives Bauteil, beispielsweise ein Schmiedebauteil oder Gussbauteil dergleichen, gebildet sind. Bevorzugt sind der Verformungsabschnitt 543 und die Betätigungsabschnitte 544 und/oder 545 einstückig.

An dem Tragbauteil 540 ist eine Kraftmesseinrichtung 570 mit Sensoren 571, 572, 573 angeordnet. Die Sensoren 571-573 sind in Sensoraufnahmen 561-563 aufgenommen. Beispielsweise umfassen die Sensoren 571-573 die bereits erläuterten Sensoren 71A, so dass insoweit auf die vorherige Beschreibung Bezug genommen wird.

Wenn das Tragbauteil 540 durch einen Rohrkörper oder einen Hohlkörper gebildet ist, können, was in der Zeichnung nicht dargestellt ist, im Bereich der Sensoraufnahmen 561-563 Aussparungen in der Art der beschriebenen Aussparungen 60 vorgesehen sein.

Von einem Grundkörper 546 des Tragbauteils 540 erstrecken sich beispielsweise zur Bildung der Sensoraufnahmen 561-563 Indikatorelemente 61, 62, die bereits erläutert worden sind und zwischen denen jedenfalls ein Aufnahmeraum 63 für den Sensor 71A vorhanden ist. Einander gegenüberliegende freie Endbereiche der Indikatorelemente 61, 62 bilden Referenzflächen 65, 66, deren Abstand durch den jeweiligen Sensor 71A erfassbar ist.

Der Sensor 571 dient beispielsweise zur Ermittlung einer Kraftkomponente parallel zur Längsachse L, beispielsweise parallel zur einer Achse Z. Die Achse Z entspricht beispielsweise der Fahrzeuglängsrichtung des Zugfahrzeugs 100.

Die näher beim Längsendbereich 42 befindliche, insbesondere am Betätigungsabschnitt 545 befindliche Sensoraufnahme 562 nimmt den Sensor 572 auf, der im Wesentlichen zur Messung einer zur Längsachse L orthogonalen, beim Betrieb des Gespanns in der Regel etwa vertikalen Achse Z dient.

Zwischen den Sensoraufnahmen 561, 562 befindet sich die Sensoraufnahme 563, die den Sensor 573 aufnimmt. Dieser Sensor 573 dient zur Erfassung von Kräften in einer Y-Richtung, also in Querrichtung des Zugfahrzeugs 100 oder des Anhängers 200. Die Achse Y ist orthogonal zur Längsachse L oder X-Achse und zudem orthogonal zur Z-Achse. Die Y-Achse verläuft im Fahrbetrieb im Wesentlichen horizontal.

Zur optimalen Kabelführung, beispielsweise eines Anschlusskabels für einen Sensor 71, können an den Tragbauteilen 40-540 zum Beispiel Bohrungen 580 vorgesehen sein, in die Halter (schematisch angedeutet ist ein Halter H) zum Halten von Kabeln, zum Beispiel eines Kabels K, einsteckbar sind, beispielsweise anhand eines Tannenzapfen-förmigen Vorsprunges, der in die Bohrung 580 einsteckbar ist.

Des Weiteren können zur gezielten Leitungsführung derartiger Anschlusskabel Kabelkanäle vorgesehen sein. Schematisch angedeutet ist ein Kabelkanal 581.

Zum Schutz eines Sensors, beispielsweise des Sensors 71A, kann vorzugsweise ein Schutzgehäuse 582 vorgesehen sein, welches schematisch in Figur 10 eingezeichnet ist. Das Schutzgehäuse 582 umfasst beispielsweise einen Faltenbalg, kann also beispielsweise einstückig sein. Es ist aber auch möglich, dass es beispielsweise aus zwei Schutzgehäuse-Teilen 583 und 584, also z.B. Gehäuseschalen besteht. Weiterhin ist es möglich, dass das Schutzgehäuse 582 das jeweilige Tragbauteil 40-540 im Wesentlichen ganz einhaust oder mantelt.

Ohne weiteres kann ein Tragbauteil in der Art des Tragbauteils 40-540 beispielsweise an dem Querträger 21 und/oder einem der Längsträger 22 der Trägeranordnung 20 zum Einsatz kommen. Weiterhin ist es möglich, dass beispielsweise ein Tragegestell eines Lastenträgers ein Tragbauteil in der Art der Tragbauteile 40-540 aufweist.

## Patentansprüche

1. Tragbauteil als Bestandteil eines Anhängers (200) oder Lastenträgers zur lösbaren Ankopplung an ein Zugfahrzeug (100), wobei das Tragbauteil (40) in Bezug auf eine Längsachse (L) einen Abstand zueinander aufweisende Längsendbereiche (41, 42) aufweist und bei Gebrauch zur Kraftübertragung einer Lastkraft zwischen den Längsendbereichen (41, 42) ausgestaltet ist, wobei die Lastkraft eine entlang der Längsachse (L) orientierte Längskraftkomponente (LK) umfasst, wobei das Tragbauteil (40) einen Verformungsabschnitt (43) zwischen seinen Längsendbereichen (41, 42) und mindestens eine Kraftmesseinrichtung (70) mit mindestens einem Sensor (71) zur Erfassung einer auf das Tragbauteil (40) bei seinem Gebrauch einwirkenden Kraft aufweist, und wobei die mindestens eine Kraftmesseinrichtung (70) zur Ermittlung der Längskraftkomponente (LK) anhand der Verformung des Verformungsabschnitts (43) ausgestaltet ist, wobei an einem insbesondere an dem Verformungsabschnitt (43) vorgesehenen Montageort (67) des mindestens einen Sensors (71) der Kraftmesseinrichtung (70) eine Aussparung (60) angeordnet ist und/oder dass an einem Montageort (67) des mindestens einen Sensors (71) der Kraftmesseinrichtung (70) mindestens ein vor einen Grundkörper des Verformungsabschnitts (43) vorstehendes Indikatorelement angeordnet ist, dessen freier Endbereich seine Position bei einer Verformung des Verformungsabschnitts (43) aufgrund der Längskraftkomponente (LK) verändert, **dadurch gekennzeichnet, dass** der Verformungsabschnitt (43) durch die Längskraftkomponente (LK) quer zu der Längsachse (L) verformbar ist.

2. Tragbauteil nach Anspruch 1, **dadurch gekennzeichnet, dass** der Verformungsabschnitt (43) durch die Längskraftkomponente (LK) parallel zu der Längsachse (L) verkürzbar oder verlängerbar ist und/oder dass ein Längsabstand der Längsendbereiche (41, 42) des Tragbauteils (40) parallel zu der Längsachse (L) durch die Längskraftkomponente (LK) verkürzbar oder verlängerbar ist.

3. Tragbauteil nach Anspruch 1 oder 2, **dadurch gekennzeichnet, dass** die Verformbarkeit des Verformungsabschnitts (43) parallel zu der Längsachse (L) größer als eine Verformbarkeit ist, die sich dadurch ergibt, dass für den mindestens einen Sensor (71) der Kraftmesseinrichtung (70) eine Aussparung (60) an dem Verformungsabschnitt (43) vorgesehen ist, und/oder dass die Verformbarkeit des Verformungsabschnitts (43) durch die Längskraftkomponente (LK) nicht durch eine Schwächung des Tragbauteils (40) an einem Montageort (67) des mindestens einen Sensors (71) der Kraftmesseinrichtung (70), insbesondere nicht durch eine Aussparung (60) an dem Montageort (67), gebildet ist.

4. Tragbauteil nach einem der vorhergehenden Ansprüche, **dadurch gekennzeichnet, dass** es Kraftumlenkungsmittel zur Kraftumlenkung quer zu der Längsachse (L), insbesondere im Bereich des Verformungsabschnitts (43), aufweist und/oder dass es mindestens einen Betätigungsabschnitt (44, 45) zur Verformung des Verformungsabschnitts (43) aufweist, der sich zwischen einem der Längsendbereiche (41, 42) des Tragbauteils (40) und dem Verformungsabschnitt (43) quer zu der Längsachse (L) erstreckt.

5. Tragbauteil nach Anspruch 4, **dadurch gekennzeichnet, dass** der Verformungsabschnitt (43) zwischen zwei Betätigungsabschnitten (44, 45) zur Verformung des Verformungsabschnitts (43) angeordnet ist, wobei vorteilhaft vorgesehen ist, dass die Betätigungsabschnitte (44, 45) zur selben Seite oder zu einander entgegengesetzten Seiten des Verformungsabschnitts (43) von dem Verformungsabschnitt (43) abstehen.

6. Tragbauteil nach einem der Ansprüche 4 oder 5, **dadurch gekennzeichnet, dass** der mindestens eine Betätigungsabschnitt (44, 45) zur Kraftübertragung der in Richtung der Längsachse (L) gerichteten Längskraftkomponente (LK) der Kraft ausgestaltet ist und/oder dass der mindestens eine Betätigungsabschnitt (44, 45) im Sinne einer Längenänderung, insbesondere einer Dehnung oder Stauchung, des Verformungsabschnitts (43) und/oder im Sinne einer Krümmung des Verformungsabschnitts (43) quer zu der Längsachse (L) wirkt und/oder dass der mindestens eine Betätigungsabschnitt (44, 45) als ein Betätigungshebel zur Verformung des Verformungsabschnitts (43) ausgestaltet ist oder einen Betätigungshebel zur Verformung des Verformungsabschnitts (43) bildet und/oder dass der mindestens eine Betätigungsabschnitt (44, 45) zwischen dem Verformungsabschnitt (43) und dem jeweiligen Längsendbereich (41, 42) des Tragbauteils frei verläuft und/oder nicht mit einer anderen Komponente, insbesondere des Tragbauteils (40), verbunden oder an einer anderen Komponente, insbesondere des Tragbauteils (40), abgestützt ist und/oder dass der Verformungsabschnitt (43) und der mindestens eine Betätigungsabschnitt (44, 45) in Bezug auf die Längsachse (L) hintereinander angeordnet sind und/oder parallel zur Längsachse (L) verlaufen und/oder dass der Verformungsabschnitt (43) und der mindestens eine Betätigungsabschnitt (44, 45) in Bezug auf die Längsachse (L) einen Längsabstand aufweisen oder sich in Bezug auf die Längsachse (L) zumindest teilweise überlappen.

7. Tragbauteil (40) nach einem der Ansprüche 4, 5 oder 6, **dadurch gekennzeichnet, dass** der Verformungsabschnitt (43) und/oder mindestens eine Komponente der Kraftmesseinrichtung (70) an dem mindestens einen Betätigungsabschnitt (44, 45) angeordnet ist und/oder dass der mindestens eine Betätigungsabschnitt (44, 45) rechtwinkelig quer oder schräg quer zu der Längsachse (L) verläuft und/oder dass der Verformungsabschnitt (43) und der mindestens eine Betätigungsabschnitt (44, 45) einstückig sind oder fest miteinander verbunden sind, insbesondere miteinander verschraubt oder stoffschlüssig, vorzugsweise anhand einer Schweißverbindung oder Klebeverbindung, miteinander verbunden sind.

8. Tragbauteil nach einem der vorhergehenden Ansprüche, **dadurch gekennzeichnet, dass** der Verformungsabschnitt (443) zur Bereitstellung einer geringeren Steifigkeit bezüglich der Längsachse (L) mindestens eine Schwächungskontur (448), insbesondere eine Aussparung (444-447), aufweist, wobei die Schwächungskontur (448) vorzugsweise abseits eines Montageorts (67) des mindestens einen Sensors (71) der Kraftmesseinrichtung (70) angeordnet ist.

9. Tragbauteil nach einem der vorhergehenden Ansprüche, **dadurch gekennzeichnet, dass** der Verformungsabschnitt (43) zur Bereitstellung einer geringeren Steifigkeit bezüglich der Längsachse (L) gegenüber mindestens einem in Bezug auf die Längsachse (L) neben dem Verformungsabschnitt (43) angeordneten Abschnitt des Tragbauteils, insbesondere mindestens einem Längsendbereich (41, 42) des Tragbauteils (40), abweichende Querschnittsgeometrie und/oder einen abweichenden Außenumfang, insbesondere Außenumfangslänge, und/oder eine abweichende Querschnittsfläche quer zu der Längsachse (L) aufweist und/oder dass der Verformungsabschnitt (43) zur Bereitstellung einer geringeren Steifigkeit bezüglich der Längsachse (L) aus einem ersten Material und ein in Bezug auf die Längsachse (L) neben dem Verformungsabschnitt (43) angeordneter Abschnitt des Tragbauteils (40), insbesondere mindestens ein Längsendbereich (41, 42) des Tragbauteils (40), aus einem zweiten Material hergestellt sind, wobei das erste Material eine geringere Biegesteifigkeit als das zweite Material aufweist.

10. Tragbauteil nach einem der vorhergehenden Ansprüche, **dadurch gekennzeichnet, dass** der Verformungsabschnitt (443) mindestens eine Aussparung (444-447) an seiner Außenumfangsfläche aufweist, die quer, insbesondere schräg, zur Längsachse (L) des Tragbauteils (40) verläuft und/oder dass der Verformungsabschnitt (43) eine Ziehharmonika-Struktur aufweist und/oder dass der Verformungsabschnitt (443) mindestens eine Auswölbung und/oder mindestens eine Vertiefung und/oder mindestens eine Aussparung (444-447) quer zu der Längsachse (L) und/oder mindestens einen Vorsprung quer zu der Längsachse (L) aufweist.

11. Tragbauteil nach einem der vorhergehenden Ansprüche, **dadurch gekennzeichnet, dass** es einen sich entlang der Längsachse (L) oder im Wesentlichen entlang der Längsachse (L) erstreckenden Grundschenkel und mindestens einen, vorzugsweise zwei, von dem Grundschenkel quer zu der Längsachse (L) abstehende Seitenschenkel aufweist, wobei vorteilhaft vorgesehen ist, dass der Verformungsabschnitt (43) an dem Grundschenkel angeordnet ist oder durch den Grundschenkel gebildet ist und/oder mindestens einer der Seitenschenkel einen Betätigungsabschnitt (44, 45) zur Verformung des Verformungsabschnitts (43) bildet.

12. Tragbauteil (40) nach einem der vorhergehenden Ansprüche, **dadurch gekennzeichnet, dass** es in Seitenansicht bezüglich der Längsachse (L) eine U-förmige oder W-förmige oder V-förmige Gestalt aufweist.

13. Tragbauteil nach einem der vorhergehenden Ansprüche, **dadurch gekennzeichnet, dass** es zwischen seinen Längsendbereichen (41, 42), insbesondere quer zu der Längsachse (L), frei steht und/oder nicht an einer anderen Komponente abgestützt ist und/oder dass es derart angeordnet und/oder ausgestaltet ist, dass es durch mindestens eine quer zu der Längsachse (L) wirkenden Querkraftkomponente (QK) der Lastkraft zwischen seinen Längsendbereichen (41, 42) quer zur Längsachse (L) verformbar ist, und/oder dass es ein einstückiges oder einteiliges Bauteil ist oder durch einen einstückigen, einteiligen Körper, insbesondere einen Schmiedekörper und/oder Gusskörper, gebildet ist.

14. Tragbauteil nach einem der vorhergehenden Ansprüche, **dadurch gekennzeichnet, dass** die mindestens eine Kraftmesseinrichtung (70) zur Ausgabe eines die in Richtung der Längsachse (L) wirkenden Kraftkomponente repräsentierenden Kraftsignals mit einer Antriebseinrichtung und/oder einer Bremseinrichtung verbunden ist, wobei die Antriebseinrichtung zum Antreiben des Anhängers (200) oder die Bremseinrichtung zum Bremsen des Anhängers (200) anhand des Kraftsignals ausgestaltet ist, und/oder dass es einen Bestandteil einer Zugkugelkupplung und/oder einer Deichsel (205) eines Anhängers (200) oder Lastenträgers bildet oder dass es einen Bestandteil eines sich im am Zugfahrzeug (100) montierten Zustand des Tragbauteils quer entlang eines Hecks des Zugfahrzeugs (100) erstreckenden Querträgers der Trägeranordnung (20) oder eines in Längsrichtung des Zugfahrzeugs (100) erstreckenden Längsträgers der Trägeranordnung (20) bildet.

15. Anhänger (200) mit einer Deichsel (205) und einer an der Deichsel (205) angeordneten Kupplungsvorrichtung (210), **dadurch gekennzeichnet, dass** ein Tragbauteil (40) nach einem der vorhergehenden Ansprüche zwischen der Kupplungsvorrichtung (210) und der Deichsel (205) angeordnet ist.

## Claims

1. Support component as part of a trailer (200) or load carrier for detachable coupling to a towing vehicle (100), wherein the support component (40) has longitudinal end regions (41, 42) at a distance from each other with respect to a longitudinal axis (L) and is configured for the force transmission in operation of a load force between the longitudinal end regions (41, 42), wherein the load force comprises a longitudinal force component (LK) oriented along the longitudinal axis (L), wherein the support component (40) has a deformation section (43) between its longitudinal end regions (41, 42) and at least one force measurement device (70) with at least one sensor (71) for recording a force acting on the support component (40) when it is operating, and wherein the at least one force measurement device (70) for recording the longitudinal force component (LK) is configured by the deformation of the deformation section (43), wherein a recess (60) is arranged at a mounting point (67) of the at least one sensor (71) of the force measurement device (70), mounting point provided in particular on the deformation section (43) and/or wherein at least one indicator element protruding ahead of a basic body of the deformation section (43) is arranged at a mounting point (67) of the at least one sensor (71) of the force measurement device (70), the free end region of the indicator element changing its position on deformation of the deformation section (43) due to the longitudinal force component (LK), **characterised in that** the deformation section (43) can be deformed by the longitudinal force component (LK) across the longitudinal axis (L).

2. Support component according to claim 1, **characterised in that** the deformation section (43) can be shortened or lengthened by the longitudinal force component (LK) parallel to the longitudinal axis (L) and/or **in that** a longitudinal distance of the longitudinal end regions (41, 42) of the support component (40) can be shortened or lengthened by the longitudinal force component (LK) parallel to the longitudinal axis (L).

3. Support component according to claim 1 or 2, **characterised in that** the deformability of the deformation section (43) parallel to the longitudinal axis (L) is greater than any deformability obtained by the fact that a recess (60) for the at least one sensor (71) of the force measurement device (70) is provided on the deformation section (43) and/or **in that** the deformability of the deformation section (43) due to the longitudinal force component (LK) is not obtained by a weakening of the support component (40) at a mounting point (67) of the at least one sensor (71) of the force measurement device (70), in particular not by a recess (60) at the mounting point (67).

4. Support component according to one of the preceding claims, **characterised in that** it has force deflection means for deflecting forces across the longitudinal axis (L), in particular in the region of the deformation section (43) and/or **in that** it has at least one actuation section (44, 45) for deforming the deformation section (43), actuation section which extends across the longitudinal axis (L) between one of the longitudinal end regions (41, 42) of the support component (40) and the deformation section (43).

5. Support component according to claim 4, **characterised in that** the deformation section (43) is arranged between two actuation sections (44, 45) for deforming the deformation section (43), wherein provision is advantageously made for the actuation sections (44, 45) to protrude from the deformation section (43) on the same side or on sides opposite each other of the deformation section (43).

6. Support component according to one of claims 4 or 5, **characterised in that** the at least one actuation section (44, 45) is designed for the force transmission of the longitudinal force component (LK) of the force directed in the direction of the longitudinal axis (L) and/or **in that** the at least one actuation section (44, 45) acts in terms of a length change, in particular an elongation or compression, of the deformation section (43) and/or in terms of a curving of the deformation section (43) across the longitudinal axis (L) and/or **in that** the at least one actuation section (44, 45) is configured as an actuation lever for deforming the deformation section (43) or forms an actuation lever for deforming the deformation section (43) and/or **in that** the at least one actuation section (44, 45) between the deformation section (43) and the respective longitudinal end section (41, 42) of the support component runs free and/or is not connected to another component, in particular of the support component (4) nor is it supported on another component, in particular of the support component (40) and/or **in that** the deformation section (43) and the at least one actuation section (44, 45) are arranged one after the other with respect to the longitudinal axis (L) and/or run parallel to the longitudinal axis (L) and/or **in that** the deformation section (43) and the at least one actuation section (44, 45) have a longitudinal distance with respect to the longitudinal axis (L) or overlap at least partially with respect to the longitudinal axis (L).

7. Support component (40) according to one of claims 4, 5 or 6, **characterised in that** the deformation section (43) and/or at least one component of the force measurement device (70) is arranged on the at least one actuation section (44, 45) and/or **in that** the at least one actuation section (44, 45) runs perpendicularly across or diagonally across the longitudinal axis (L) and/or in that the deformation section (43) and the at least one actuation section (44, 45) are a single piece or are permanently connected together, in particular screwed or substance-bonded together, preferably by a welded joint or adhesive bonded joint.

8. Support component according to one of the preceding claims, **characterised in that** the deformation section (443) has at least one weakening contour (448), in particular a recess (444-447) for providing reduced rigidity with respect to the longitudinal axis (L), wherein the weakening contour (448) is preferably arranged away from a mounting point (67) of the at least one sensor (71) of the force measurement device (70).

9. Support component according to one of the preceding claims, **characterised in that** the deformation section (43) for providing reduced rigidity with respect to the longitudinal axis (L) has a different cross-section geometry and/or a different outer circumference, in particular, different outer circumference length and/or a different cross-section area across the longitudinal axis (L) compared with at least one section, arranged next to the deformation section (43), of the support component, in particular at least one longitudinal end region (41, 42) of the support component (40), and/or **in that** the deformation section (43) for providing reduced rigidity with respect to the longitudinal axis (L) is made of a first material and a section of the support component (40), in particular at least one longitudinal end region (41, 42) of the support component (40), arranged next to the deformation section (43) with respect to the longitudinal axis (L) is made of a second material, wherein the first material has a lower bending strength than the second material.

10. Support component according to one of the preceding claims, **characterised in that** the deformation section (443) has at least one recess (444-447) on its outer circumferential surface, which runs across, in particular diagonally to, the longitudinal axis (L) of the support component (40) and/or **in that** the deformation section (43) has an accordion structure and/or **in that** the deformation section (443) has at least one bulge and/or at least one depression and/or at least one recess (444-447) across the longitudinal axis (L) and/or at least one protrusion across the longitudinal axis (L).

11. Support component according to one of the preceding claims, **characterised in that** it has one base leg extending along the longitudinal axis (L) or substantially along the longitudinal axis (L) and at least one, preferably two, side legs protruding from the base leg across the longitudinal axis (L), wherein provision is advantageously made for the deformation section (43) to be arranged on the base leg or for it to be formed by the base leg and/or at least one of the side legs forms an actuation section (44, 45) for deforming the deformation section (43).

12. Support component (40) according to one of the preceding claims, **characterised in that** in side view with respect to the longitudinal axis (L), it has a U shaped or W shaped or V shaped form.

13. Support component according to one of the preceding claims, **characterised in that** it stands free between its longitudinal end regions (41, 42), in particular across the longitudinal axis (L), and/or is not supported on another component and/or **in that** it is arranged and/or configured such that it can be deformed across the longitudinal axis (L) between its longitudinal end regions (41, 42) by at least one lateral force component (QK) of the load force acting across the longitudinal axis (L) and/or **in that** it is a single piece or single part component or is formed by a single piece, single part body, in particular a forged body and/or a cast body.

14. Support component according to one of the preceding claims, **characterised in that** the at least one force measurement device (70) for outputting a force signal representing the force components acting in the direction of the longitudinal axis (L) is connected to a drive device and/or a brake device, wherein the drive device is configured to drive the trailer (200) on the basis of the force signal or the brake device is configured to brake the trailer (200) on the basis of the force signal and/or **in that** it forms a constituent part of a coupling ball and/or a towbar (205) of a trailer (200) or load carrier or **in that** it forms a constituent part of a cross member of the carrier arrangement (20) extending laterally along a rear of the towing vehicle (100), with the cross member mounted on the towing vehicle (100) or of a side member of the carrier arrangement (200) extending in the longitudinal direction of the towing vehicle (100).

15. Trailer (200) with a towbar (205) and a coupling device (210) arranged on the towbar (205), **characterised in that** a support component (40) according to one of the preceding claims is arranged between the coupling device (210) and the towbar (205).

## Revendications

1. Composant porteur en tant que partie intégrante d'une remorque (200) ou d'un porte-charges destiné ou destinée à être accouplé(e) de manière amovible à un véhicule de traction (100), dans lequel le composant porteur (40) présente, par rapport à un axe longitudinal (L), des zones d'extrémité longitudinales (41, 42) présentant une distance les unes par rapport aux autres et est configuré, en cas d'utilisation, pour le transfert de force d'une force de charge entre les zones d'extrémité longitudinales (41, 42), dans lequel la force de charge comprend une composante de force longitudinale (LK) orientée le long de l'axe longitudinal (L), dans lequel le composant porteur (40) présente une section de déformation (43) entre ses zones d'extrémité longitudinales (41, 42) et au moins un système de mesure de force (70) avec au moins un capteur (71) destiné à détecter une force agissant sur le composant porteur (40) lors de son utilisation, et dans lequel l'au moins un système de mesure de force (70) est configuré pour déterminer une composante de force longitudinale (LK) à l'aide de la déformation de la section de déformation (43), dans lequel un évidement (60) est disposé sur un emplacement de montage (67), prévu en particulier sur la section de déformation (43), de l'au moins un capteur (71) du système de mesure de force (70) et/ou au moins un élément indicateur faisant saillie devant un corps de base de la section de déformation (43), dont la zone d'extrémité libre modifie sa position lors d'une déformation de la section de déformation (43) en raison de la composante de force longitudinale (LK), est disposé sur un emplacement de montage (67) de l'au moins un capteur (71) du système de mesure de force (70),
**caractérisé en ce que** la section de déformation (43) peut être déformée par la composante de force longitudinale (LK) de manière transversale par rapport à l'axe longitudinal (L).

2. Composant porteur selon la revendication 1, **caractérisé en ce que** la section de déformation (43) peut être raccourcie ou rallongée de manière parallèle par rapport à l'axe longitudinal (L) par la composante de force longitudinale (LK), et/ou qu'une distance longitudinale des zones d'extrémité longitudinales (41, 42) du composant porteur (40) peut être raccourcie ou rallongée par la composante de force longitudinale (LK) de manière parallèle par rapport à l'axe longitudinal (L).

3. Composant porteur selon la revendication 1 ou 2, **caractérisé en ce que** la déformabilité de la section de déformation (43) est plus grande de manière parallèle par rapport à l'axe longitudinal (L) qu'une déformabilité, qui résulte du fait qu'un évidement (60) est prévu sur la section de déformation (43) pour l'au moins un capteur (71) du système de mesure de force (70), et/ou que la déformabilité de la section de déformation (43) est formée par la composante de force longitudinale (LK), non pas par un affaiblissement du composant porteur (40) sur un emplacement de montage (67) de l'au moins un capteur (71) du système de mesure de force (70), en particulier non pas par un évidement (60) sur l'emplacement de montage (67).

4. Composant porteur selon l'une quelconque des revendications précédentes, **caractérisé en ce qu'**il présente des moyens de renvoi de force pour le renvoi de force de manière transversale par rapport à l'axe longitudinal (L), en particulier dans la zone de la section de déformation (43), et/ou qu'il présente au moins une section d'actionnement (44, 45) destinée à la déformation de la section de déformation (43), qui s'étend entre une des zones d'extrémité longitudinales (41, 42) du composant porteur (40) et la section de déformation (43) de manière transversale par rapport à l'axe longitudinal (L).

5. Composant porteur selon la revendication 4, **caractérisé en ce que** la section de déformation (43) est disposée entre deux sections d'actionnement (44, 45) pour la déformation de la section de déformation (43), dans lequel il est prévu de manière avantageuse que les sections d'actionnement (44, 45) dépassent de la section de déformation (43) vers le même côté ou vers des côtés opposés les uns aux autres de la section de déformation (43).

6. Composant porteur selon l'une quelconque des revendications 4 ou 5, **caractérisé en ce que** l'au moins une section d'actionnement (44, 45) est configurée pour le transfert de force de la composante de force longitudinale (LK) de la force dirigée en direction de l'axe longitudinal (L), et/ou que l'au moins une section d'actionnement (44, 45) agit de manière transversale par rapport à l'axe longitudinal (L) au sens d'un changement de longueur, en particulier d'un allongement ou d'un tassement, de la section de déformation (43) et/ou au sens d'une incurvation de la section de déformation (43), et/ou que l'au moins une section d'actionnement (44, 45) est configurée en tant qu'un levier d'actionnement pour la déformation de la section de déformation (43) ou forme un levier d'actionnement pour la déformation de la section de déformation (43) et/ou que l'au moins une section d'actionnement (44, 45) s'étend librement entre la section de déformation (43) et la zone d'extrémité longitudinale (41, 42) respective du composant porteur et/ou n'est pas reliée à une autre composante, en particulier du composant porteur (40) ou n'est pas soutenue sur une autre composante, en particulier du composant porteur (40), et/ou que la section de déformation (43) et l'au moins une section d'actionnement (44, 45) sont disposées l'une derrière l'autre par rapport à l'axe longitudinal (L) et/ou s'étendent de manière parallèle à l'axe longitudinal (L), et/ou que la section de déformation (43) et l'au moins une section d'actionnement (44, 45) présentent une distance longitudinale par rapport à l'axe longitudinal (L) ou se chevauchent au moins en partie par rapport à l'axe longitudinal (L).

7. Composant porteur (40) selon l'une quelconque des revendications 4, 5 ou 6, **caractérisé en ce que** la section de déformation (43) ou au moins une composante du système de mesure de force (70) sont disposées sur l'au moins une section d'actionnement (44, 45), et/ou que l'au moins une section d'actionnement (44, 45) s'étend de manière transversale à angle droit ou de manière transversale à l'oblique par rapport à l'axe longitudinal (L), et/ou que la section de déformation (43) et l'au moins une section d'actionnement (44, 45) sont d'un seul tenant ou sont reliées l'une à l'autre de manière solidaire, en particulier sont vissées l'une à l'autre ou sont reliées l'une à l'autre par liaison de matière, de préférence à l'aide d'une liaison par soudage ou d'une liaison par collage.

8. Composant porteur selon l'une quelconque des revendications précédentes, **caractérisé en ce que** la section de déformation (443) présente, pour fournir une rigidité inférieure en ce qui concerne l'axe longitudinal (L), au moins un contour d'affaiblissement (448), en particulier un évidement (444-447), dans lequel le contour d'affaiblissement (448) est disposé de préférence à l'écart d'un emplacement de montage (67) de l'au moins un capteur (71) du système de mesure de force (70).

9. Composant porteur selon l'une quelconque des revendications précédentes, **caractérisé en ce que** la section de déformation (43) présente, pour fournir une rigidité inférieure en ce qui concerne l'axe longitudinal (L), une géométrie de section transversale divergeant par rapport au moins à une section du composant porteur disposée à côté de la section de déformation (43) par rapport à l'axe longitudinal (L), en particulier à au moins une zone d'extrémité longitudinale (41, 42) du composant porteur (40) et/ou une périphérie extérieure, en particulier une longueur de périphérie extérieure, divergente, et/ou une surface de section transversale divergente de manière transversale par rapport à l'axe longitudinal (L), et/ou que la section de déformation (43) est fabriquée pour fournir une rigidité inférieure en ce qui concerne l'axe longitudinal (L) à partir d'un premier matériau et une section, disposée à côté de la section de déformation (43) par rapport à l'axe longitudinal (L), du composant porteur (40), en particulier au moins une zone d'extrémité longitudinale (41, 42) du composant porteur (40), est fabriquée à partir d'un deuxième matériau, dans lequel le premier matériau présente une rigidité à la flexion inférieure à celle du deuxième matériau.

10. Composant porteur selon l'une quelconque des revendications précédentes, **caractérisé en ce que** la section de déformation (443) présente au moins un évidement (444-447) sur sa surface de périphérie extérieure, qui s'étend de manière transversale, en particulier de manière oblique, par rapport à l'axe longitudinal (L) du composant porteur (40), et/ou que la section de déformation (43) présente une structure en accordéon, et/ou que la section de déformation (443) présente au moins un bombement convexe et/ou au moins un renfoncement et/ou au moins un évidement (444-447) de manière transversale par rapport à l'axe longitudinal (L) et/ou au moins une partie faisant saillie de manière transversale par rapport à l'axe longitudinal (L).

11. Composant porteur selon l'une quelconque des revendications précédentes, **caractérisé en ce qu'**il présente une branche de base s'étendant le long de l'axe longitudinal (L) ou sensiblement le long de l'axe longitudinal (L) et au moins une branche latérale, de préférence deux branches latérales, dépassant de la branche de base de manière transversale par rapport à l'axe longitudinal (L), dans lequel il est prévu de manière avantageuse que la section de déformation (43) est disposée sur la branche de base ou est formée par la branche de base et/ou au moins une des branches latérales forme une section d'actionnement (44, 45) pour la déformation de la section de déformation (43).

12. Composant porteur (40) selon l'une quelconque des revendications précédentes, **caractérisé en ce qu'**il présente dans la vue latérale par rapport à l'axe longitudinal (L) une forme en U ou en W ou en V.

13. Composant porteur selon l'une quelconque des revendications précédentes, **caractérisé en ce qu'**il est dégagé entre ses zones d'extrémité longitudinales (41, 42), en particulier de manière transversale par rapport à l'axe longitudinal (L) et/ou n'est pas soutenu sur une autre composante et/ou qu'il est disposé et/ou configuré de telle manière qu'il peut être déformé par au moins une composante de force transversale (QK), agissant de manière transversale par rapport à l'axe longitudinal (L), de la force de charge entre ses zones d'extrémité longitudinales (41, 42) de manière transversale par rapport à l'axe longitudinal (L), et/ou qu'il est un composant d'un seul tenant ou en une partie ou est formé par un corps d'un seul tenant, en une seule partie, en particulier un corps forgé et/ou un corps coulé.

14. Composant porteur selon l'une quelconque des revendications précédentes, **caractérisé en ce que** l'au moins un système de mesure de force (70) est relié à un système d'entraînement et/ou un système de freinage pour l'émission d'un signal de force représentant la composante de force agissant en direction de l'axe longitudinal (L), dans lequel le système d'entraînement est configuré pour entraîner la remorque (200) ou le système de freinage est configuré pour freiner la remorque (200) à l'aide du signal de force, et/ou qu'il fait partie intégrante d'un attelage à boule de traction et/ou d'une barre de traction (205) d'une remorque (200) ou d'un porte-charges ou qu'il fait partie intégrante d'une traverse, s'étendant de manière transversale le long d'un hayon du véhicule de traction (100) dans l'état du composant porteur monté sur le véhicule de traction (100), de l'ensemble porteur (20) ou d'un longeron, s'étendant dans la direction longitudinale du véhicule de traction (100), de l'ensemble porteur (20).

15. Remorque (200) avec une barre de traction (205) et un dispositif d'attelage (210) disposé sur la barre de traction (205), **caractérisée en ce qu'**un composant porteur (40) selon l'une quelconque des revendications précédentes est disposé entre le dispositif d'attelage (210) et la barre de traction (205).
